# EUROPEAN PATENT APPLICATION

(11) **EP 4 712 670 A1**
(43) Date of publication of application: **18.03.2026**
(21) Application number: 24818512.6
(22) Date of filing: 24.05.2024
(51) Int. Cl.: H04W 74/0833

(54) **COMMUNICATION METHOD AND APPARATUS**

(30) Priority: 09.06.2023 CN 202310685951
(71) Applicant: Huawei Technologies Co., Ltd., Shenzhen, Guangdong 518129 (CN)
(72) Inventor: YU, Tong, Shenzhen, Guangdong 518129 (CN); SHI, Meng, Shenzhen, Guangdong 518129 (CN); LIAO, Shuri, Shenzhen, Guangdong 518129 (CN); DOU, Shengyue, Shenzhen, Guangdong 518129 (CN); YANG, Liu, Shenzhen, Guangdong 518129 (CN); ZHANG, Xiaoyu, Shenzhen, Guangdong 518129 (CN); WANG, Hui, Shenzhen, Guangdong 518129 (CN)
(74) Representative: Thun, Clemens
(86) International application number: PCT/CN2024/095213
(87) International publication number: WO 2024/250979

(57) **Abstract**

This application relates to the field of communication technologies, and provides a communication method and apparatus. In the method, before receiving a random access preamble from a terminal device, a network device sends a random access response message to the terminal device. For different terminal devices, the network device may respectively indicate different timing advances by using different random access response messages, to stagger time at which the different terminal devices send messages (for example, Msg3) to the network device. This reduces mutual interference between the messages sent by the different terminal devices, and reduces a probability that the network device fails to receive the message of the terminal device, to help improve an access success rate of the terminal device.

## Description

### CROSS-REFERENCE TO RELATED APPLICATIONS

This application claims priority to Chinese Patent Application No. 202310685951.6, filed with the China National Intellectual Property Administration on June 9, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a random access (random access, RA) mechanism, before receiving a random access preamble (preamble) from a terminal device, a network device sends a random access response (random access response, RAR) message to the terminal device. Correspondingly, the terminal device receives the RAR message from the network device. If the terminal device completes receiving of the RAR message in a slot (slot) n, the terminal device may feed back a message 3 (message 3, Msg3) to the network device in a slot (n+X), to request to establish a connection to the network device. In a long term evolution (long term evolution, LTE) system, X is, for example, 6. In a new radio (new radio, NR) system, X is, for example, 3, 4, 5, or 6. The slot (n+X) may represent a slot numbered (n+X). If slots are numbered from 0, the slot (n+X) may be an (n+X+1)^{th} slot.

In the random access mechanism, round-trip time between the terminal device and the network device cannot be estimated because the network device does not receive the random access preamble from the terminal device when delivering the RAR message. Therefore, the terminal device does not complete uplink synchronization when sending Msg3. However, different terminal devices each send Msg3 according to the foregoing slot (n+X) mechanism, and interference may exist between Msg3s sent by the different terminal devices. Consequently, the network device fails to correctly receive Msg3 of the terminal device, resulting in an access failure of the terminal device.

### SUMMARY

Embodiments of this application provide a communication method and apparatus, to improve an access success rate of a terminal device.

According to a first aspect, an embodiment of this application provides a communication method. The method may be performed by a network device, a software module, a hardware module (for example, a chip), or the like in the network device. For ease of description, an example in which a network device performs the method is used below for description. The method includes: before receiving a first random access preamble from a first terminal device, sending a first random access response message, where the first random access response message indicates a first timing advance, the first timing advance is for determining a first time window for receiving a first message, and the first message is for requesting to establish a connection between the first terminal device and a network device; before receiving a second random access preamble from a second terminal device, sending a second random access response message, where the second random access response message indicates a second timing advance, the second timing advance is for determining a second time window for receiving a second message, the second message is for requesting to establish a connection between the second terminal device and the network device, and an overlapping duration between the second time window and the first time window is less than or equal to a first threshold.

In this embodiment of this application, before receiving a random access preamble of a terminal device, the network device indicates a timing advance to the terminal device. In this way, different terminal devices (for example, the first terminal device and the second terminal device) may stagger, based on timing advances indicated by the network device, time windows for sending messages (for example, the first message and the second message), so that time windows in which the network device receives the messages from the different terminal devices are staggered. This reduces interference between the messages of the different terminal devices, and reduces a probability that the network device fails to receive the message of the terminal device, to improve an access success rate of the terminal device. In addition, the network device may flexibly indicate the timing advances of the different terminal devices. In this way, the network device does not need to adjust time of sending a random access response message to stagger time of sending the messages by the different terminal devices, so that the network device can send more random access response messages within a specific duration. This improves an access capacity of the network device, enables the different terminal devices to access the network device in a more timely manner, to improve access efficiency of the terminal devices. In addition, in this embodiment of this application, the terminal device may send the message based on the timing advance, and does not need to perform an additional operation. In this way, a capability requirement on the terminal device is low, and modification does not need to be performed on the terminal device, so that the solution provided in this embodiment of this application can be applicable to an existing terminal device. In other words, the solution provided in this embodiment of this application has good universality. In addition, the network device may indicate different timing advances to the different terminal devices, so that the different terminal devices can perform delay compensation based on the timing advances. In this way, this embodiment of this application is applicable to a scenario with a high communication delay, such as a non-terrestrial network.

In a possible implementation, a difference between a first timing advance and a second timing advance satisfies one of the following: greater than or equal to a first value; or greater than or equal to a second value, where the second value is a difference between the first value and the first threshold, the first value is a largest value in a plurality of third values, any third value in the plurality of third values is a difference between round-trip time of the network device to two terminal devices, and the two terminal devices are any two terminal devices within a coverage area of at least one beam of the network device.

In the foregoing implementation, an implementation of staggering the first time window and the second time window is provided. For example, the network device may control a difference between the first timing advance and the second timing advance to be large. In this way, even if round-trip time of different terminal devices to the network device is large, the different terminal devices can still stagger time windows for sending messages, to ensure that the network device can successfully receive the message of the terminal device, and improve an access success rate of the terminal device.

In a possible implementation, the first threshold is zero. Alternatively, the first threshold is determined based on one or more cyclic prefixes in cyclic prefixes of M time units. For example, the first threshold is a length of a first cyclic prefix in the cyclic prefixes of the M time units. Alternatively, the first threshold is determined based on lengths of cyclic prefixes of M time units, where the first message and/or the second message are/is received in the M time units, and M is an integer greater than 1.

In the foregoing implementation, when the first threshold is zero, this is equivalent to that the first time window and the second time window do not overlap. When the first threshold is based on one or more cyclic prefixes in the cyclic prefixes of the M time units, this is equivalent to that an overlapping duration between the first time window and the second time window is short. When the first time window and the second time window do not overlap, or the overlapping duration is short, the network device can successfully receive messages from different terminal devices, to improve access success rates of the different terminal devices. In addition, because the overlapping duration between the first time window and the second time window is short, the network device may receive more messages from different terminal devices within a specific duration, so that the network device can access more terminal devices within the specific duration.

In a possible implementation, the first cyclic prefix is one of the following: a cyclic prefix of any time unit in the M time units; or a longest cyclic prefix in the M time units; or a shortest cyclic prefix in the M time units.

In the foregoing implementation, a plurality of implementations for the first threshold are provided, to enrich implementations of the first threshold. For example, the first threshold may be a length of a cyclic prefix of any time unit in the M time units, so that a value of the first threshold is more flexible. Alternatively, the first threshold is a length of the longest cyclic prefix in the M time units, so that a value of the first threshold is relatively large. Alternatively, the first threshold is a length of the shortest cyclic prefix in the M time units, so that an overlapping duration between the first time window and the second time window is short enough, to help improve a success rate of receiving messages from different terminal devices by the network device.

In a possible implementation, another implementation of the first threshold is provided. For example, the first threshold is an average value of the lengths of the cyclic prefixes of the M time units.

In a possible implementation, the method further includes: receiving the first message from the first terminal device in the first time window; and/or receiving the second message from the second terminal device in the second time window.

In a possible implementation, the method further includes: determining, based on the first timing advance, a third time window in which the first terminal device sends the first message, and determining the first time window based on the third time window; and/or determining, based on the second timing advance, a fourth time window in which the second terminal device sends the second message, and determining the second time window based on the fourth time window. Optionally, a start moment of the first time window is equal to or later than a start moment of the third time window, and/or a start moment of the second time window is equal to or later than a start moment of the fourth time window.

In the foregoing implementation, a manner in which the network device determines the first time window and/or the second time window is provided. The network device may determine, based on a timing advance, a time window in which the terminal device sends a message, and further determine a time window in which the message from the terminal device is received, so that the network device can receive the message from the terminal device in a timely manner.

In a possible implementation, the network device is a network device in a non-terrestrial network. For example, the network device may be a satellite or a satellite ground station in the non-terrestrial network.

According to a second aspect, an embodiment of this application provides a communication method. The method may be performed by a network device, a software module, a hardware module (for example, a chip), or the like in the network device. For ease of description, an example in which a network device performs the method is used below for description. The method includes: sending a first timing advance to a first terminal device, where the first timing advance is for determining a first time window for receiving a first message, a start moment of the first time window is different from a start moment of a first time unit, and the first message is for requesting to establish a connection between the first terminal device and a network device; sending a second timing advance to a second terminal device, where the second timing advance is for determining a second time window for receiving a second message, a start moment of the second time window is different from a start moment of a second time unit, there is a time interval of N time units between the start moment of the first time window and the start moment of the second time window, N is a natural number, and the second message is for requesting to establish a connection between the first terminal device and the network device; receiving the first message from the first terminal device in the first time window; and receiving the second message from the second terminal device in the second time window.

In this embodiment of this application, the first time window does not need to be aligned with the start moment of the first time unit, and the second time window does not need to be aligned with the start moment of the second time unit. Compared with a solution in which a start moment of a time window in which the network device receives a message of a terminal device is aligned with a start moment of a time unit, the start moments of the first time window and the second time window are more flexible. Because the start moments of the first time window and the second time window do not need to be aligned with start moments of time units, manners for obtaining values of the first advance and the second advance are more flexible. In addition, the start moment of the first time window may be aligned with the start moment of the second time window, or there may be a positive integer quantity of time units between the start moment of the first time window and the start moment of the second time window, so that the network device may receive the first message and the second message in a frequency division manner or a spatial division manner, to improve a success rate of receiving the first message and the second message by the network device.

In a possible implementation, the method further includes: determining first round-trip time between the network device and the first terminal device; performing a modulo operation on the first round-trip time to determine a first remainder; and subtracting a first duration from the first remainder to determine the first timing advance.

In the foregoing implementation, an implementation in which the network device determines the first timing advance is provided. For example, the network device may perform a further operation on the first remainder, so that a value of the first timing advance is small, to avoid a case in which the first terminal device cannot accurately or successfully perform delay compensation because the value of the first timing advance is excessively large.

In a possible implementation, before subtracting the first duration from the first remainder to determine the first timing advance, the method further includes: determining that the first remainder is greater than a second duration. In another possible implementation, if the first remainder is less than or equal to the second duration, the first timing advance is the first remainder.

In the foregoing implementation, a manner of flexibly determining the first timing advance is provided. If the first remainder is relatively large, a result of subtracting the first duration from the first remainder is used as the first timing advance, to avoid a case in which the first timing advance is excessively large. If the first remainder is small, the first remainder may be used as the first timing advance, so that a calculation process of the network device may be simplified.

In a possible implementation, determining the first round-trip time between the network device and the first terminal device includes: receiving a first random access preamble from the first terminal device; and determining the first round-trip time based on a moment at which the first random access preamble is received.

In the foregoing implementation, the network device may estimate round-trip time between the network device and the first terminal device based on the moment at which the first random access preamble is received, and a manner of determining the first round-trip time is provided.

In a possible implementation, the method further includes: determining second round-trip time between the network device and the second terminal device; performing a modulo operation on the second round-trip time to determine a second remainder; and subtracting a first duration from the second remainder to determine the second timing advance.

In the foregoing implementation, an implementation in which the network device determines the second timing advance is provided. For example, the network device may perform a further operation on the second remainder, so that a value of the second timing advance is small, to avoid a case in which the second terminal device cannot accurately or successfully perform delay compensation because the value of the second timing advance is excessively large.

In a possible implementation, before subtracting the first duration from the second remainder to determine the second timing advance, the method further includes: determining that the second remainder is greater than the second duration. In another possible implementation, if the second remainder is less than or equal to the second duration, the second timing advance is the second remainder.

In the foregoing implementation, a manner of flexibly determining the second timing advance is provided. For example, the network device subtracts the second duration from the second remainder only when determining that the second remainder is large, to avoid a case in which the second timing advance is excessively large. If the second remainder is small, the second remainder may be used as the second timing advance, so that a calculation process of the network device may be simplified.

In a possible implementation, determining the second round-trip time between the network device and the second terminal device includes: receiving a second random access preamble from the second terminal device; and determining the second round-trip time based on a moment at which the second random access preamble is received.

In the foregoing implementation, the network device may estimate round-trip time between the network device and the first terminal device based on the moment at which the first random access preamble is received, and a manner of determining the second round-trip time is provided.

In a possible implementation, the network device is a network device in a non-terrestrial network. For example, the network device may be a satellite or a satellite ground station in the non-terrestrial network.

According to a third aspect, an embodiment of this application provides a communication apparatus. The communication apparatus may be the network device in the first aspect and any possible implementation, or a software module or a hardware module (for example, a chip) configured in the network device, or a device having a network device function. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, under control of the processing module, the transceiver module is configured to: send a first random access response message, where the first random access response message indicates a first timing advance, the first timing advance is for determining a first time window for receiving a first message, and the first message is for requesting to establish a connection between a first terminal device and a network device; receive a first random access preamble from the first terminal device, where the first random access preamble is received after the first random access response message is sent; send a second random access response message, where the second random access response message indicates a second timing advance, the second timing advance is for determining a second time window for receiving a second message, the second message is for requesting to establish a connection between a second terminal device and the network device, and an overlapping duration between the second time window and the first time window is less than or equal to a first threshold; and receive a second random access preamble from the second terminal device, where the second random access preamble is received after the second random access response message is sent.

The communication apparatus may further implement the steps performed by the network device in the first aspect and any possible implementation. Details are not described herein again.

According to a fourth aspect, an embodiment of this application provides a communication system. The communication system includes a network device, a first terminal device, and a second terminal device. A function of the network device may implement the function of the network device in any one of the first aspect and the possible implementations. The network device is, for example, the network device in the third aspect. For a function of the first terminal device, refer to the function of the first terminal device in any one of the first aspect and the possible implementations. For a function of the second terminal device, refer to the function of the second terminal device in any one of the first aspect and the possible implementations.

According to a fifth aspect, an embodiment of this application provides a communication apparatus. The communication apparatus may be the network device in the second aspect and any possible implementation, or a software module or a hardware module (for example, a chip) configured in the network device, or a device having a network device function. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, under control of the processing module, the transceiver module is configured to: send a first timing advance to a first terminal device, where the first timing advance is for determining a first time window for receiving a first message, a start moment of the first time window is different from a start moment of a first time unit, and the first message is for requesting to establish a connection between the first terminal device and a network device; send a second timing advance to a second terminal device, where the second timing advance is for determining a second time window for receiving a second message, a start moment of the second time window is different from a start moment of a second time unit, there is a time interval of N time units between the start moment of the first time window and the start moment of the second time window, N is a natural number, and the second message is for requesting to establish a connection between the first terminal device and the network device; receive the first message from the first terminal device in the first time window; and receive the second message from the second terminal device in the second time window.

In a possible implementation, the processing module is further configured to: determine first round-trip time between the network device and the first terminal device; perform a modulo operation on the first round-trip time to determine a first remainder; and subtract a first duration from the first remainder to determine the first timing advance.

In a possible implementation, the processing module is further configured to, before subtracting the first duration from the first remainder to determine the first timing advance, determine that the first remainder is greater than a second duration.

In a possible implementation, the processing module is specifically configured to: receive a first random access preamble from the first terminal device; and determine the first round-trip time based on a moment at which the first random access preamble is received.

In a possible implementation, the processing module is further configured to: determine second round-trip time between the network device and the second terminal device; perform a modulo operation on the second round-trip time to determine a second remainder; and subtract the first duration from the second remainder to determine the second timing advance.

In a possible implementation, the processing module is further configured to, before subtracting the first duration from the second remainder to determine the second timing advance, determine that the second remainder is greater than the second duration.

In a possible implementation, the processing module is specifically configured to: receive a second random access preamble from the second terminal device; and determine the second round-trip time based on a moment at which the second random access preamble is received.

According to a sixth aspect, an embodiment of this application provides a communication system. The communication system includes a network device, a first terminal device, and a second terminal device. A function of the network device may implement the function of the network device in any one of the second aspect and the possible implementations. The network device is, for example, the network device in the fifth aspect. For a function of the first terminal device, refer to the function of the first terminal device in any one of the second aspect and the possible implementations. For a function of the second terminal device, refer to the function of the second terminal device in any one of the second aspect and the possible implementations.

According to a seventh aspect, an embodiment of this application provides a communication apparatus, including a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method according to any one of the first aspect, the second aspect, and any possible implementation by using a logic circuit or by executing code instructions.

In a specific implementation process, the communication apparatus may be a chip, an input circuit may be an input pin, an output circuit may be an output pin, and a processing circuit may be a transistor, a gate circuit, a trigger, any logic circuits, or the like. An input signal received by the input circuit may be received and inputted by, for example, but not limited to, a receiver. A signal outputted by the output circuit may be outputted to, for example, but not limited to, a transmitter and transmitted by the transmitter. In addition, the input circuit and the output circuit may be a same circuit, where the circuit is used as the input circuit and the output circuit at different moments. Specific implementations of the processor and the various circuits are not limited in this embodiment of this application.

In an implementation, the communication apparatus may be a wireless communication device, to be specific, a computer device supporting a wireless communication function. Specifically, the wireless communication device may be a terminal, for example, a smartphone, or may be a radio access network device, for example, a base station. A system chip may also be referred to as a system on chip (system on chip, SoC), or briefly referred to as a SoC chip. A communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In a physical implementation, a part or all of chips in the communication chip may be integrated inside the SoC chip. For example, the baseband processing chip is integrated into the SoC chip, but the radio frequency processing chip is not integrated with the SoC chip. The interface circuit may be a radio frequency processing chip in the wireless communication device, and the processing circuit may be a baseband processing chip in the wireless communication device.

In another implementation, the communication apparatus may be a part of devices in the wireless communication device, for example, an integrated circuit product such as a system chip or a communication chip. The interface circuit may be an input/output interface, an interface circuit, an output circuit, an input circuit, a pin, a related circuit, or the like on the chip or a chip system. The processor may alternatively be embodied as a processing circuit or a logic circuit.

According to an eighth aspect, an embodiment of this application provides a communication apparatus, including a processor and a memory. The memory is configured to store one or more computer programs, and the one or more computer programs include computer-executable instructions. When the communication apparatus runs, the processor executes the one or more computer programs stored in the memory, to cause the communication apparatus to perform the method according to any one of the first aspect, the second aspect, and any possible implementation.

Optionally, the communication apparatus further includes another component, for example, an antenna, an input/output module, and an interface. These components may be hardware, software, or a combination of software and hardware.

According to a ninth aspect, an embodiment of this application provides a chip system. The chip system includes a processor and an interface. The processor is configured to invoke instructions from the interface and run the instructions. When the processor executes the instructions, the method according to any one of the first aspect, the second aspect, and any possible implementation is implemented.

According to a tenth aspect, an embodiment of this application provides a computer-readable storage medium. The computer-readable storage medium is configured to store a computer program or instructions. When the computer program or the instructions are run, the method according to any one of the first aspect, the second aspect, and any possible implementation is implemented.

According to an eleventh aspect, an embodiment of this application provides a computer program product including instructions. When the computer program product is run on a computer, the method according to any one of the first aspect, the second aspect, and any possible implementation is implemented.

According to a twelfth aspect, an embodiment of this application provides a communication system, including a network device and a terminal device. The network device may be configured to perform the method according to any one of the first aspect, the second aspect, and any possible implementation.

For beneficial effects of any one of the technical solutions in the third aspect to the eleventh aspect, refer to the beneficial effects of the corresponding technical solutions in the first aspect or the second aspect. Repeated descriptions are not described again.

### BRIEF DESCRIPTION OF DRAWINGS

FIG. 1 is a diagram of a random access process;
FIG. 2 is a diagram of a communication system according to an embodiment of this application;
FIG. 3 is a diagram of a satellite system in a transparent transmission mode to which an embodiment of this application is applicable;
FIG. 4 is a diagram of another satellite system in a transparent transmission mode to which an embodiment of this application is applicable;
FIG. 5 is a diagram of a satellite system in a regenerative mode to which an embodiment of this application is applicable;
FIG. 6 is a diagram of another satellite system in a regenerative mode to which an embodiment of this application is applicable;
FIG. 7 is a diagram of a communication method according to an embodiment of this application;
FIG. 8 is a diagram of round-trip time between a network device and a terminal device according to an embodiment of this application;
FIG. 9 is a diagram of a random access process according to an embodiment of this application;
FIG. 10 is a diagram of a random access process according to an embodiment of this application;
FIG. 11 shows time windows in which a network device receives Msg3 of different terminal devices in another random access mechanism;
FIG. 12 is a diagram of another communication method according to an embodiment of this application;
FIG. 13 shows time windows in which a network device receives messages of different terminal devices according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The following describes some terms in embodiments of this application, to facilitate understanding of a person skilled in the art.
1: A terminal device is a device having a wireless transceiver function, and may be a fixed device, a mobile device, a handheld device (handheld device), a wearable device, a vehicle-mounted device, or a wireless apparatus (for example, a communication module or a chip system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle-to-everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearables, smart transportation, a smart city (smart city), an uncrewed aerial vehicle, and a robot. The terminal device may sometimes be referred to as user equipment (user equipment, UE), a terminal, an access station, a UE station, a remote station, a wireless communication device, a user apparatus, or the like.

In embodiments of this application, an apparatus configured to implement a function of the terminal device may be a terminal device, or may be an apparatus that can support the terminal device in implementing the function, for example, a chip system, or may be a software module or a hardware module (for example, a chip) in the terminal device. In technical solutions provided in embodiments of this application, an example in which an apparatus configured to implement a function of the terminal device is a terminal device is used to describe the technical solutions provided in embodiments of this application.

2: A network device includes, for example, an access network device (or referred to as an access network element) and/or a core network (core network, CN) device (or referred to as a core network element).
(1) An access network device is a device having a wireless transceiver function, and is configured to communicate with the terminal device. The access network device includes but is not limited to a non-terrestrial network device such as a base station (BTS, NodeB, eNodeB/eNB, or gNodeB/gNB) in the foregoing communication system, a transmission reception point (transmission reception point, TRP), a base station evolved after a 3GPP, an access node in a wireless fidelity (wireless fidelity, Wi-Fi) system, a wireless relay node, a wireless backhaul node, a satellite, or an unmanned aerial vehicle. The base station may be a macro base station, a micro base station, a picocell base station, a small cell, a relay station, or the like. A plurality of base stations may support networks using a same access technology mentioned above, or may support networks using different access technologies mentioned above. The base station may include one or more co-site or non-co-site transmission reception points. The access network device may alternatively be a radio controller in a cloud radio access network (cloud radio access network, C(R)AN) scenario. The access network device may alternatively be a server, a wearable device, a vehicle-mounted device, or the like. For example, an access network device in a vehicle to everything (vehicle to everything, V2X) technology may be a road side unit (road side unit, RSU). An example in which the access network device is a base station for description is used below for description. A plurality of access network devices in the communication system may be base stations of a same type, or may be base stations of different types. The base station may communicate with the terminal device, or may communicate with the terminal device through a relay station. The terminal device may communicate with a plurality of base stations in different access technologies.

In a possible architecture of the access network device, the access network device includes a central unit (central unit, CU) and/or a distributed unit (distributed unit, DU). The CU and the DU may be understood as division of the access network device from a perspective of logical functions. The CU and the DU may be physically separated, or may be deployed together. This is not specifically limited in this embodiment of this application. One CU may be connected to one DU, or a plurality of DUs may share one CU. CU-DU division may be performed according to a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, media access control (media access control, MAC) layer, and physical layer are deployed on the DU. In this embodiment of this application, the CU-DU division is not completely limited to being performed in the foregoing protocol stack manner. There may be another division manner. For example, the CU-DU division may be performed based on a service type.

In this embodiment of this application, the access network device may also be a central unit-control plane (central unit-control plane, CU-CP) node or a central unit-user plane (central unit-user plane, CU-UP) node, or include a CU-CP and a CU-UP. The CU-CP is responsible for a control plane function, and mainly includes RRC and a PDCP-C. The PDCP-C is mainly responsible for encryption and decryption, integrity protection, data transmission, and the like of control plane data. The CU-UP is responsible for a user plane function, and mainly includes a service data adaptation protocol (service data adaptation protocol, SDAP) and a PDCP-U. The SDAP is mainly responsible for processing data of a core network and mapping a flow (flow) to a bearer. The PDCP-U is mainly responsible for encryption and decryption, integrity protection, header compression, serial number maintenance, data transmission, and the like of a data plane.

In different systems, the CU (including the CU-CP or the CU-UP) or the DU may alternatively have a different name, but a person skilled in the art may understand a meaning of the name. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The core network device is configured to implement at least one of functions such as mobility management, data processing, session management, and policy and charging. Names of devices that implement core network functions in systems using different access technologies may be different. This is not limited in this embodiment of this application. Using a 5th generation (5th generation, 5G) system as an example, the core network device includes an access and mobility management function (access and mobility management function, AMF), a session management function (session management function, SMF), a PCF, a user plane function (user plane function, UPF), or the like. In embodiments of this application, an apparatus configured to implement a function of the network device may be a network device, or may be an apparatus that can support the network device in implementing the function, for example, a chip system, or may be a software module or a hardware module (for example, a chip) in the network device. In the technical solutions provided in embodiments of this application, an example in which the apparatus configured to implement the function of the network device is a network device is used to describe the technical solutions provided in embodiments of this application.

3: Round-trip time (round-trip time, RTT) refers to round-trip time of a signal between locations of two devices that communicate with each other, or may refer to round-trip time of a signal between two location points. For example, a terminal device and a network device are used as an example. Assuming that a distance between a location a of the terminal device and a location b of the network device is Sab, RTT=Sab*2/v, where v represents a propagation speed of an electromagnetic wave.

4: A timing advance (timing advance, TA) is for adjusting time of uplink transmission and/or downlink transmission. A duration corresponding to the TA may be a duration value for compensation or adjustment, and the duration corresponding to the TA may be referred to as a timing advance value (TA value), a TA value, a TA duration, a delay compensation value, a delay compensation parameter, or the like. For example, during uplink transmission, a terminal device may send the uplink data with an advance of a timing advance value. In a random access phase, a network device may indicate the TA value to the terminal device by using a timing advance command (timing advance command, TAC) in a RAR message, in other words, the TAC in the RAR message may indicate the TA value. In a data transmission (data transmission for short) phase, the network device may indicate the TA value to the terminal device by using a TAC in a MAC control element (control element, CE), in other words, the TAC in the MAC CE may indicate the TA value.

5: A time window may be a period of continuous time, and the time window is also referred to as a time period. For example, a time window is the 1^{st} millisecond (ms) to the 2^{nd} ms. For another example, a time window is from the 1^{st} time unit to the 3^{rd} time unit.

6: A time unit may be a slot (slot), a symbol (symbol), a subframe (subframe), a halfframe, a frame (frame), a mini-subframe (mini-frame), a mini-slot (mini-slot), or a transmission occasion (transmission occasion, TO). This is not limited in this embodiment of this application. The time unit may be considered as a granularity of a time domain resource.

7: A symbol may be an orthogonal frequency-division multiplexing (orthogonal frequency-division multiplexing, OFDM) symbol, a cyclic prefix orthogonal frequency division multiplexing (cyclic prefix orthogonal frequency division multiplexing, CP-OFDM) symbol, a discrete fourier transform-spread-orthogonal frequency division multiplexing (discrete fourier transform-spread-orthogonal frequency division multiplexing, DFT-s-OFDM) symbol, or a symbol of another type. This is not limited in this embodiment of this application.

8: A beam (beam) may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi co-location (quasi co-location, QCL) information, or the like. The beam may be considered as a communication resource, or may be considered as a spatial domain behavior of signal transmission. For example, the beam may be understood as a main lobe of a radiation pattern of an antenna array (beam is the main lobe of the radiation pattern of antenna array), or the beam may be understood as distribution of signal strength formed in different transmission directions in space after a signal is transmitted through an antenna. The beam may be a wide beam, a narrow beam, or a beam of another type. One beam may correspond to one transmission direction. Optionally, a network device may adjust a weight of an antenna, so that a beam of the network device may point to different directions, to correspond to different coverage areas. In embodiments of this application, a coverage area of the beam includes a ground coverage area of the beam.

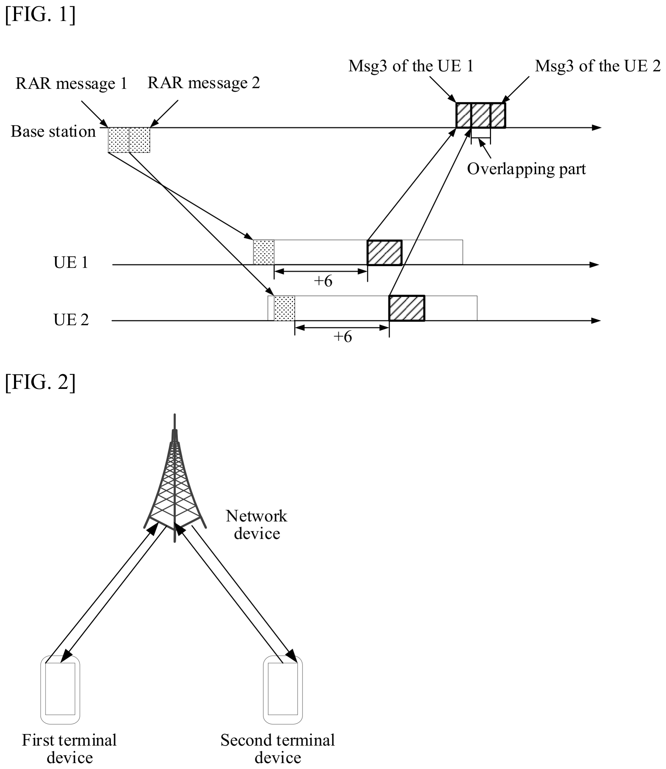

The following describes an example of a random access mechanism mentioned above with reference to a diagram of a random access process shown in FIG. 1. In FIG. 1, an example in which X is 6, a network device is a base station, and different terminal devices include a UE 1 and a UE 2 is used.

As shown in FIG. 1, the base station may separately send a RAR message 1 and a RAR message 2, for example, send the RAR message 1 in a slot 1, and send the RAR message 2 in a slot 2. The UE 1 sends Msg3 (which is referred to as Msg3 of the UE 1 for short below) in a slot (2+6), and the UE 2 sends Msg3 (which is referred to as Msg3 of the UE 2 for short below) in a slot (2+6). As shown in FIG. 1, mutual interference exists between Msg3s of the UE 1 and Msg3 of the UE 2. Specifically, in FIG. 1, a time window in which the base station receives Msg3 of the UE 1 overlaps a time window in which the base station receives Msg3 of the UE 2. An overlapping part may be an overlapping part shown in FIG. 1. This causes the base station to fail to successfully receive Msg3 of the UE 1 and/or Msg3 of the UE 2, resulting in an access failure of the UE 1 and/or the UE 2.

In view of this, embodiments of this application provide a communication solution. In this solution, a network device (for example, an access network device, specifically, a base station) may send a first random access response message before receiving a first random access preamble from a first terminal device, and send a second random access response message before receiving a second random access preamble from a second terminal device. The first random access response message indicates a first TA value, and the second random access response message indicates a second TA value. For example, the first terminal device receives the first random access response message, and the second terminal device receives the second random access response message, so that the first terminal device may adjust, based on the first TA value, time for sending a first message (for example, Msg3), and the second terminal device may, based on the second TA value, adjust time for sending a second message (for example, Msg3). In this way, a time window in which the network device receives the first message and a time window in which the network device receives the second message overlap for a short duration, or do not overlap at all. This reduces mutual interference between messages of different terminal devices, and reduces a case in which the network device fails to receive a message of the terminal device, to help improve an access success rate of the terminal device.

The communication solution provided in this embodiment of this application may be applied to various communication networks (or systems), for example, an LTE communication network, a 5G mobile communication network (for example, an NR network), a non-terrestrial network (non-terrestrial network, NTN), an integrated satelliteterrestrial communication network, a sixth generation communication network, or a communication network that appears in a future communication development (or future evolution) process. The NTN may be a communication network involving a flying object, and the NTN may include a satellite network, a high-altitude platform system (high-altitude platform station, HAPS), an air-to-ground network, or the like. The NTN can be deployed independently or as a supplement to a terrestrial network. The communication solution provided in this embodiment of this application may be further applied to a machine to machine (machine to machine, M2M) communication network, a machine type communication (machine type communication, MTC) communication network, another communication network, or the like. This is not limited in this embodiment of this application.

FIG. 2 is a diagram of a communication system according to an embodiment of this application. Alternatively, FIG. 2 may be considered as a diagram of a scenario according to an embodiment of this application. As shown in FIG. 2, the communication system includes a network device, a first terminal device, and a second terminal device. The network device may separately communicate with the first terminal device and the second terminal device. Optionally, the first terminal device and the second terminal device may also communicate with each other. The network device is, for example, an access network device in the NTN, and is specifically, for example, a satellite and/or a satellite ground station. For implementations of the first terminal device and the second terminal device, refer to content of the foregoing implementations of the terminal device. Details are not described herein again.

In addition, in FIG. 2, an example in which there are one network device, one first terminal device, and one second terminal device is used. Actually, quantities of network devices, first terminal devices, and second terminal devices are not limited.

The following describes a satellite system to which the communication solution provided in this embodiment of this application is applicable. According to a communication mode of a satellite, the satellite system may have a transparent transmission (transparent) mode and a regenerative (regenerative) mode. The transparent transmission mode may also be referred to as a transparent forwarding mode. In the transparent transmission mode, the satellite may also be referred to as a satellite base station or the like. The satellite is configured to convert frequencies and forward a signal, and the signal is generated and sent by a satellite ground station. In the regenerative mode, the satellite may carry (or be coupled to) a base station or a DU in the base station. The satellite can parse and process a signal received from the ground, and send a processed signal to a terminal device (for example, the first terminal device or the second terminal device), to implement signal regeneration.

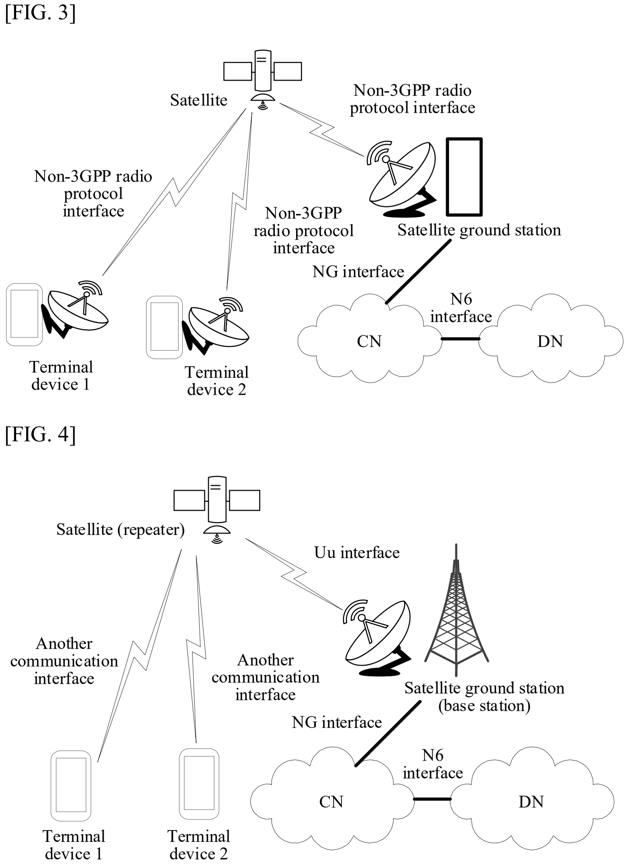

For example, FIG. 3 is a diagram of a satellite system in a transparent transmission mode to which an embodiment of this application is applicable. In FIG. 3, a satellite and/or a satellite ground station may be used as an example of a network device, one of a terminal device 1 or a terminal device 2 may be used as an example of a first terminal device, and the other of the terminal device 1 or the terminal device 2 may be used as an example of a second terminal device.

As shown in FIG. 3, a satellite may access a network by using a non-3GPP radio protocol (non-3GPP radio protocol). A communication connection is established between any terminal device (for example, the terminal device 1 or the terminal device 2) and the satellite, and a communication connection is established between the satellite and the satellite ground station by using a non-3GPP radio protocol interface. The satellite ground station may include an access point. The satellite ground station and a CN may communicate with the CN by using an NG interface (for example, an N2 interface or an N3 interface), and the CN and a data network (data network, DN) communicate with each other by using an N6 interface.

For example, FIG. 4 is a diagram of another satellite system in a transparent transmission mode to which an embodiment of this application is applicable. In FIG. 4, a satellite and/or a satellite ground station may be used as an example of a network device, one of a terminal device 1 or a terminal device 2 may be used as an example of a first terminal device, and the other of the terminal device 1 or the terminal device 2 may be used as an example of a second terminal device.

Different from FIG. 3, in FIG. 4, the satellite may access a network by using a 3GPP radio protocol. As shown in FIG. 4, the satellite ground station is a base station, and the satellite may be equivalent to a repeater (repeater). A communication connection is established between the satellite and the satellite ground station by using a Uu interface (or referred to as an air interface), and a communication connection may be established between any terminal device (for example, the terminal device 1 or the terminal device 2) and the satellite by using another transceiver. Interfaces between the satellite ground station, a CN, and a DN are the same as those in FIG. 3. For similarities, refer to each other. Details are not described herein again.

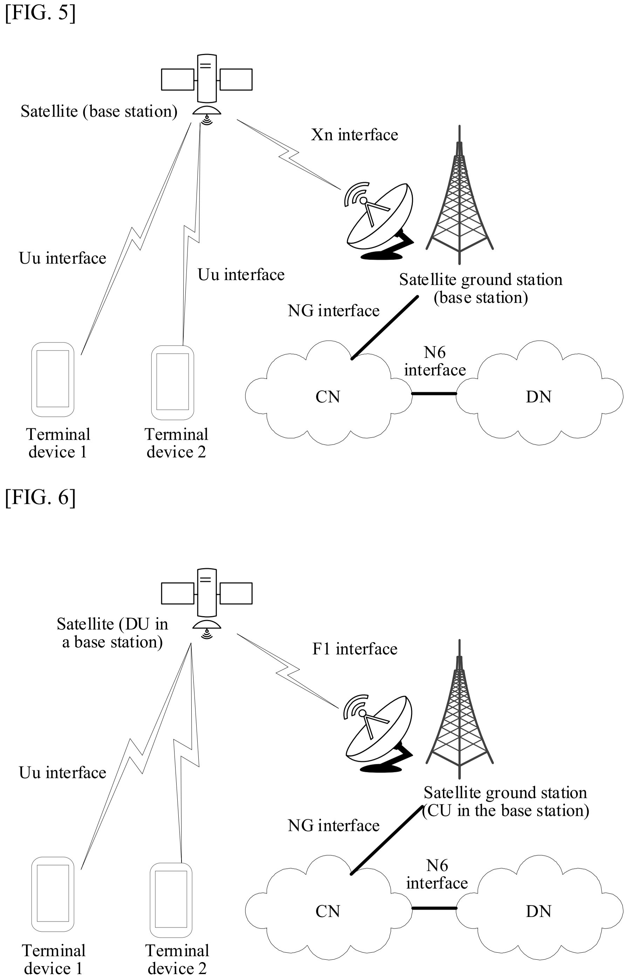

For example, FIG. 5 is a diagram of a satellite system in a regenerative mode to which an embodiment of this application is applicable. In FIG. 5, a satellite and/or a satellite ground station may be used as an example of a network device, one of a terminal device 1 or a terminal device 2 may be used as an example of a first terminal device, and the other of the terminal device 1 or the terminal device 2 may be used as an example of a second terminal device.

As shown in FIG. 5, the satellite carries a base station, and the satellite ground station carries a base station. A communication connection may be established between any terminal device (for example, the terminal device 1 or the terminal device 2) and the satellite by using a Uu interface, and a communication connection may be established between the satellite and the satellite ground station by using an Xn interface. Interfaces between the satellite ground station, a CN, and a DN are the same as those in FIG. 2. For similarities, refer to each other. Details are not described herein again. Optionally, in the satellite system shown in FIG. 5, the satellite ground station may alternatively be a gateway of the satellite, and does not include a base station.

For example, FIG. 6 is a diagram of another satellite system in a regenerative mode to which an embodiment of this application is applicable. In FIG. 6, a satellite and/or a satellite ground station may be used as an example of a network device, one of a terminal device 1 or a terminal device 2 may be used as an example of a first terminal device, and the other of the terminal device 1 or the terminal device 2 may be used as an example of a second terminal device.

As shown in FIG. 6, the satellite carries a DU in a base station, and the satellite ground station includes a CU in the base station. A communication connection may be established between any terminal device (for example, the terminal device 1 or the terminal device 2) and the satellite by using a Uu interface, and a communication connection may be established between the satellite and the satellite ground station by using an F1 interface. Interfaces between the satellite ground station, a CN, and a DN are the same as those in FIG. 3. For similarities, refer to each other. Details are not described herein again.

It should be noted that the satellite ground stations in the satellite systems shown in FIG. 3 to FIG. 6 may be configured to connect a satellite to a network. The satellite ground station may also be referred to as a gateway (gateway), a ground station, an earth station, or the like.

In addition, the satellite systems shown in FIG. 3 to FIG. 6 do not constitute any limitation on a communication system to which this embodiment of this application is applicable. In addition, names of devices in a satellite system are not limited in FIG. 3 to FIG. 6. For example, in different communication scenarios, a satellite ground station, a satellite, or the like may have another name. In addition, the satellite in this embodiment of this application may be replaced with another non-terrestrial network device, for example, a high-altitude platform device or a high-altitude flight device. This is not limited in this embodiment of this application.

The following describes the method provided in this embodiment of this application with reference to the accompanying drawings. In the accompanying drawings corresponding to embodiments of this application, all steps represented by dashed lines are optional steps. In addition, in embodiments of this application, a network device is, for example, the network device in FIG. 2, or any satellite, any satellite ground station, or the like in FIG. 3 to FIG. 6. In embodiments of this application, a first terminal device is, for example, the first terminal device in FIG. 2, or any terminal device 1 in FIG. 3 to FIG. 6. In embodiments of this application, a second terminal device is, for example, the second terminal device in FIG. 2, or any terminal device 2 in FIG. 3 to FIG. 6. In addition, if the technical solutions provided in embodiments of this application are applied to another communication system, a name, a function, and/or the like of a device may change. This is not limited in embodiments of this application.

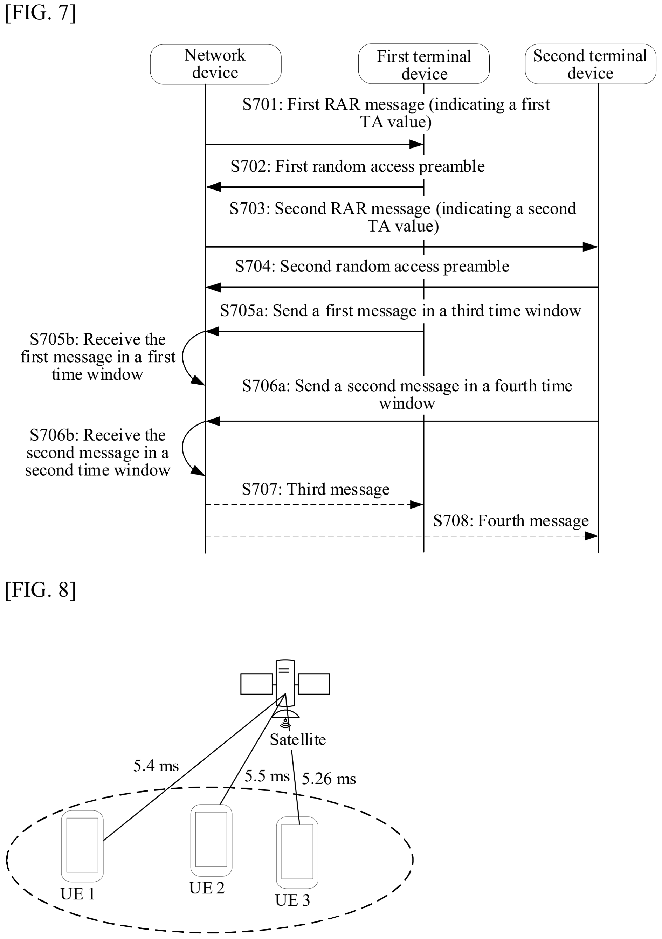

FIG. 7 is a diagram of a communication method according to an embodiment of this application.

S701: A network device sends a first RAR message. In this embodiment of this application, an example in which a first terminal device receives the first RAR message is used.

The network device may send the first RAR message in a broadcast or paging (paging) manner. In this embodiment of this application, an example in which the first terminal device receives the first RAR message is used. The following describes a mechanism in which the network device sends the first RAR message and the first terminal device receives the first RAR message in this assumption.

For example, there may be identifiers of a plurality of random access preambles preconfigured or predefined in the network device. For example, the identifiers of the plurality of random access preambles are predefined in the network device in a protocol. Optionally, each of the plurality of random access preambles may include a cyclic prefix (cyclic prefix, CP) part and a data (sequence, Seq) part. In this embodiment of this application, an example in which the plurality of random access preambles include a first random access preamble and a second random access preamble is used.

The network device may indicate a random access preamble (for example, the first random access preamble) by using the first RAR message. For example, the first RAR message carries an identifier of the first random access preamble. In this case, the first RAR message may be considered as the first RAR message corresponding to the first random access preamble. After the network device sends the first RAR message, the first terminal device determines that the first random access preamble indicated by the first RAR message is a random access preamble used by the first terminal device for random access, and the first terminal device determines to select the first RAR message. In this case, the first terminal device may continue to perform a random access process based on the first RAR message.

The random access preamble used by the first terminal device for random access may be a random access preamble used by the first terminal device to initiate random access. That the first terminal device determines to select the first RAR message may be understood as that the first terminal device determines that the first terminal device is a receive end of the first RAR message, or may be understood as that the first terminal device is a terminal device paged by the network device by using the first RAR message.

The first RAR message may indicate a first TA value. For example, the first RAR message includes a TAC, and the TAC indicates or includes the first TA value. Assuming that the first terminal device receives the first RAR message, the first TA value may be used by the network device to determine a first time window, and the first time window is a time window for receiving a first message from the first terminal device. The first message is used by the first terminal device to request to establish a connection to the network device, for example, establish a radio resource control (radio resource control, RRC) connection. The first message is, for example, Msg3. The first TA value may be preconfigured or predefined in the network device. Alternatively, the first TA value may be determined by the network device. For example, there are a plurality of TA values predefined in the network device in a protocol, and the network device determines, from the plurality of TA values, one TA value as the first TA value.

For example, each of the plurality of TA values is associated with an index (or a sequence number or an identifier) of one RAR message, and the network device determines an index of the first RAR message, and determines a TA value corresponding to the index of the first RAR message as the first TA value.

Table 1 below shows an example of a plurality of TA values and a plurality of RAR messages provided in this embodiment of this application.

**Table 1**

| Index of a RAR message | 1 | 2 | 3 | Not send | 4 | 5 | 6 | Not send | 7 | 8 |
|---|---|---|---|---|---|---|---|---|---|---|
| TA (ms) | 0.66 | 0.41 | 0.16 | Not send | 0.66 | 0.41 | 0.16 | Not send | 0.66 | 0.41 |
| TA (Tₛ) | 1282 | 801 | 320 | Not send | 1282 | 801 | 320 | Not send | 1282 | 801 |

As shown in Table 1, if the network device determines that the index of the first RAR message is 1, the network device determines that the first TA value is 0.66 millisecond (ms) or 1282 Tₛ, where Tₛ may be a basic time unit for NR (basic time unit for NR); or if the index of the first RAR message is 2, it is determined that the first TA value is 0.41 ms or 801 Tₛ; or if the index of the first RAR message is 3, it is determined that the first TA value is 0.16 ms or 320 Tₛ; or the like. There are one or more slots between a start moment at which a RAR message whose index is 3 is sent and a start moment at which a RAR message whose index is 4 is sent. There are one or more slots between a start moment at which a RAR message whose index is 6 is sent and a start moment at which a RAR message whose index is 7 is sent.

Optionally, the first TA value is less than or equal to a third duration. The third duration is, for example, a maximum value to which a TA value can be adjusted. For example, in an LTE system, the third duration is, for example, 0.67 ms.

Tₛ=1/(15k*2048)=1/30720000 s=32.55208 nanosecond (ns). In this optional manner, the first TA value may be 0.66 ms, 0.41 ms, or 0.16 ms. In other words, the first TA value may be 1282 Tₛ, 801 Tₛ, or 320 Tₛ.

Alternatively, in an NR system, the third duration is, for example, 3846 T_{c} or 957 T_{c}. T_{C}=Tₛ/64, where T_{c} may be a basic time unit for LTE (basic time unit for LTE). When a subcarrier spacing corresponding to the NR system is 15 kilohertz (kHz), the first TA value may be 3846 T_{c}, 3365 T_{c}, 2884 T_{c}, 2403 T_{c}, 1922 T_{c}, 1441 T_{c}, 960 T_{c}, 479 T_{c}, 1919 T_{c}, 1438 T_{c}, 957 T_{c}, or 476 T_{c}.

When the subcarrier spacing corresponding to the NR system is 30 kHz, the first TA value may be 3846 T_{c}, 2885 T_{c}, 1924 T_{c}, 2 T_{c}, 961 T_{c}, 0 T_{c}, 959 T_{c}, or 1918 T_{c}. Alternatively, the first TA value may be 957 T_{c}, 1916 T_{c}, 955 T_{c}, 1914 T_{c}, 953 T_{c}, 1912 T_{c}, or 951 T_{c}.

Optionally, after receiving the RAR message, the terminal device may send a fifth message to the network device. The fifth message is, for example, Msg3. In this embodiment of this application, a fifth message sent by the first terminal device may be, for example, a first message in the following, and a fifth message sent by a second terminal device is, for example, a second message in the following. Values of the first TA value may be different when start time units in which the terminal device sends the fifth message are different. In other words, the first TA value is associated with a start time unit in which the terminal device sends the fifth message.

Table 2 below shows an example of a plurality of TA values, a plurality of RAR messages, and start time units corresponding to a plurality of fifth messages provided in this embodiment of this application. In Table 2, an example in which the subcarrier spacing corresponding to the NR system is 30 kHz is used.

**Table 2**

| Index of a RAR message | 1 | 2 | 3 | 4 | 5 | 6 | 7 | 8 | Not send | 9 | 10 | 11 | 12 |
|---|---|---|---|---|---|---|---|---|---|---|---|---|---|
| TA (T_{c}) | 3846 | 3365 | 2884 | 2403 | 1922 | 1441 | 960 | 479 | Not send | 1919 | 1438 | 957 | 476 |
| Start time unit for a fifth message | n+3 | n+3 | n+3 | n+3 | n+3 | n+3 | n+3 | n+3 | | n+4 | n+4 | n+4 | n+4 |

As shown in Table 2, when the start time unit in which the terminal device sends the fifth message is a time unit (n+3), if the index of the first RAR message is 1, the first TA value is 3846 T_{c}; or if the index of the first RAR message is 2, the first TA value is 3365 T_{c}; or if the index of the first RAR message is 3, the first TA value is 2884 T_{c}; or if the index of the first RAR message is 4, the first TA value is 2430 T_{c}; or if the index of the first RAR message is 5, the first TA value is 1922 T_{c}; or if the index of the first RAR message is 6, the first TA value is 1441 T_{c}; or if the index of the first RAR message is 7, the first TA value is 960 T_{c}; or if the index of the first RAR message is 8, the first TA value is 479 T_{c}. The time unit (n+3) may indicate that the time unit is numbered (n+3). If slots are numbered from 0, the time unit (n+3) indicates an (n+4)^{th} slot.

When the start time unit in which the terminal device sends the fifth message is a time unit (n+4), if the index of the first RAR message is 9, the first TA value is 1919 T_{c}; or if the index of the first RAR message is 10, the first TA value is 1438 T_{c}; or if the index of the first RAR message is 11, the first TA value is 957 T_{c}; or if the index of the first RAR message is 12, the first TA value is 476 T_{c}.

Table 3 below shows another example of a plurality of TA values, a plurality of RAR messages, and start time units corresponding to a plurality of fifth messages provided in this embodiment of this application.

**Table 3**

| Index of a RAR message | 1 | 2 | 3 | 4 | 5 | Not send | 6 | 7 | Not send | 8 | Not send | 9 |
|---|---|---|---|---|---|---|---|---|---|---|---|---|
| TA (T_{c}) | 3846 | 2885 | 1924 | 963 | 2 | Not send | 961 | 0 | Not send | 959 | Not send | 1918 |
| Start time unit for a fifth message | n+4 | n+4 | n+4 | n+4 | n+4 | | n+4 | n+4 | | n+4 | | n+4 |

| Index of a RAR message | 10 | Not send | 11 | 12 | Not send | 13 | 14 | Not send | 15 | 16 | Not send | |
|---|---|---|---|---|---|---|---|---|---|---|---|---|
| TA (T_{c}) | 957 | Not send | 1916 | 955 | Not send | 1914 | 953 | Not send | 1912 | 951 | Not send | |
| Start time unit for a fifth message | n+4 | | n+4 | n+4 | | n+4 | n+4 | | n+5 | n+6 | | |

As shown in Table 3, when the start time unit in which the terminal device sends the fifth message is a time unit (n+4), if the index of the first RAR message is 1, the first TA value is 3846 T_{c}; or if the index of the first RAR message is 2, the first TA value is 2885 T_{c}; or if the index of the first RAR message is 3, the first TA value is 1924 T_{c}; or if the index of the first RAR message is 4, the first TA value is 963 T_{c}; or if the index of the first RAR message is 5, the first TA value is 2 T_{c}; or if the index of the first RAR message is 6, the first TA value is 961 T_{c}; or if the index of the first RAR message is 7, the first TA value is 0 T_{c}; or if the index of the first RAR message is 8, the first TA value is 959 T_{c}; or if the index of the first RAR message is 9, the first TA value is 1918 T_{c}; or if the index of the first RAR message is 10, the first TA value is 957 T_{c}; or if the index of the first RAR message is 11, the first TA value is 1916 T_{c}; or if the index of the first RAR message is 12, the first TA value is 955 T_{c}; or if the index of the first RAR message is 13, the first TA value is 1914 T_{c}; or if the index of the first RAR message is 14, the first TA value is 953 T_{c}.

When the start time unit in which the terminal device sends the fifth message is a time unit (n+5), if the index of the first RAR message is 15, the first TA value is 1912 T_{c}. When the start time unit in which the terminal device sends the first RAR message is (n+6), if the index of the first RAR message is 16, the first TA value is 951 T_{c}.

Because the first RAR message indicates the first TA value, the first terminal device may determine the first TA value based on the received first RAR message.

S702: The first terminal device sends the first random access preamble to the network device. Correspondingly, the network device receives the first random access preamble from the first terminal device.

Optionally, the first random access preamble may be carried in Msg1, and the first terminal device sends Msg1 to the network device. This is equivalent to sending the first random access preamble. After the network device accesses the first random access preamble, it is determined that the first RAR message is received by the first terminal device.

The network device may first send the first RAR message, and then receive the first random access preamble from the first terminal device. In other words, the network device sends the first RAR message before receiving the first random access preamble from the first terminal device. For the first terminal device, the first terminal device may first send the first random access preamble to the network device, and then receive the first RAR message from the network device.

S703: The network device sends a second RAR message.

In this embodiment of this application, an example in which the second terminal device receives the second RAR message is used. For example, the network device may also send the second RAR message in a broadcast or paging manner. For a mechanism in which the network device sends the second RAR message and the second terminal device receives the second RAR message, refer to the foregoing content of sending the first RAR message by the network device and receiving the first RAR message by the first terminal device. Details are not described herein again.

The second RAR message may indicate a second TA value. For example, the second RAR message includes a TAC, and the TAC carries the second TA value. Assuming that the second terminal device receives the second RAR message, the second TA value may be used by the network device to determine a second time window, and the second time window is a time window for receiving the second message from the second terminal device. The second message is used by the first terminal device to request to establish a connection to the network device, for example, establish an RRC connection. The second message is, for example, Msg3. The second TA value may be preconfigured or predefined in the network device. Alternatively, the second TA value may be determined by the network device. For example, there are a plurality of TA values preconfigured or predefined in the network device, and the network device determines, from the plurality of TA values, one TA value as the second TA value. For a manner in which the network device determines the second TA value, refer to the foregoing manner in which the network device determines the first TA value.

In a possible implementation, the first TA value and the second TA value satisfy the following condition 1 or condition 2. The following separately describes the condition 1 and the condition 2.

Condition 1: A difference between the first TA value and the second TA value is greater than or equal to a first value.

The first value is a largest difference between round-trip time of the network device to any two terminal devices, and the any two terminal devices are any two terminals within a coverage area of at least one beam of the network device. The at least one beam may include one or more beams. The coverage area of the at least one beam may also be considered as a coverage area of one or more cells, or may be considered as a coverage area of one or more synchronization signals. The synchronization signal is, for example, a synchronization signal and physical broadcast channel block (synchronization signal and physical broadcast channel block, SSB). The first value may be preconfigured or predefined in the network device, or may be determined by the network device.

For example, a difference between round-trip time of the network device to any two terminal devices is a third value, there may be a plurality of third values corresponding to a coverage area of at least one beam of the network device, and a largest value in the plurality of third values is the first value.

For example, the network device is a satellite, the at least one beam is one beam, a radius of the beam is 45 kilometers (km), a maximum elevation angle of any terminal device is 30 degrees (°), and an orbital height of the network device is 600 km. In this case, the first value within the beam is 0.25 ms.

FIG. 8 is a diagram of round-trip time between a network device and a terminal device according to an embodiment of this application. In FIG. 8, an example in which a terminal device is a UE, a network device is a satellite, and a coverage area of a beam of the satellite covers three UEs, namely, a UE 1, a UE 2, and a UE 3 is used.

As shown in FIG. 8, round-trip time of the satellite to the UE 1, the UE 2, and the UE 3 are respectively 5.4 ms, 5.5 ms, and 5.26 ms. Correspondingly, the plurality of third values include (5.5 ms-5.4 ms)=0.1 ms, (5.4 ms-5.26 ms)=0.14 ms, and (5.5 ms-5.26 ms)=0.24 ms. Correspondingly, the first value is a largest value in the plurality of third values, that is, 0.24 ms.

Optionally, if the first RAR message and the second RAR message are two adjacent RAR messages, a difference between the first TA value and the second TA value may be equal to the first value. The two adjacent RAR messages are two adjacent RAR messages sent by the network device in a same time unit.

For example, still refer to any one of the foregoing Table 1 to Table 3. A difference between TA values corresponding to any two adjacent RAR messages is the first value (that is, 0.25 ms).

Condition 2: A difference between the first TA value and the second TA value is greater than or equal to a second value.

The second value is a difference between the first value and a first threshold. The first threshold may be preconfigured or predefined in the network device, or may be determined by the network device. The first threshold may be one of the following A1 and A2.

A1: The first threshold is zero. In this case, this is equivalent to that the difference between the first TA value and the second TA value is equal to the first value.

A2: The first threshold is determined based on a length of a cyclic prefix of a part or all of M time units. Alternatively, it may be described as follows: The first threshold is related to (or corresponds to) a length of a cyclic prefix of a part or all of M time units. M is an integer greater than 1.

The M time units may be a time domain resource for the network device to receive the first message. In other words, the network device receives the first message in the M time units. Alternatively, the M time units may be a time domain resource for the network device to receive the second message. In other words, the network device receives the second message in the M time units. Alternatively, the M time units may be a set of time domain resources for the network device to receive the first message and the second message. In other words, the network device receives the first message and the second message in the M time units.

For example, if the time unit is a slot, and the network device receives the first message in a slot 1 and a slot 2, and receives the second message in a slot 3 and a slot 4, the M time units may include the slot 1, the slot 2, the slot 3, and the slot 4.

The following describes possible implementations of the first threshold in A2.

A2-1: The first threshold is a length of one cyclic prefix (for example, referred to as a first cyclic prefix) in cyclic prefixes of the M time units.

One time unit in the M time units includes one or more cyclic prefixes, and therefore the cyclic prefixes of the M time units include a plurality of cyclic prefixes. For brevity of description, the cyclic prefixes of the M time units are briefly described as a plurality of cyclic prefixes in the following. For example, the first cyclic prefix is a longest cyclic prefix in the plurality of cyclic prefixes. Alternatively, the first cyclic prefix is a shortest cyclic prefix in the plurality of cyclic prefixes. Alternatively, the first cyclic prefix is any cyclic prefix in the plurality of cyclic prefixes. Alternatively, the first cyclic prefix is a K^{th} cyclic prefix in the plurality of cyclic prefixes, where K is preconfigured or predefined in the network device, and K is a positive integer.

A2-2: The first threshold is an average value of lengths of a plurality of cyclic prefixes.

A2-3: The first threshold is an average value of lengths of a part of cyclic prefixes in a plurality of cyclic prefixes.

Because the second RAR message indicates the second TA value, the second terminal device may determine the second TA value based on the received second RAR message.

S704: The second terminal device sends the second random access preamble to the network device. Correspondingly, the network device receives the second random access preamble from the second terminal device.

Optionally, the second random access preamble may be carried in Msg1, and the second terminal device sends Msg1 to the network device. This is equivalent to sending the second random access preamble. After the network device accesses the second random access preamble, it is determined that the second RAR message is received by the second terminal device.

The network device may first send the second RAR message, and then receive the second random access preamble from the second terminal device. In other words, the network device sends the second RAR message before receiving the second random access preamble from the second terminal device. For the second terminal device, the second terminal device may first send the second random access preamble to the network device, and then receive the second RAR message from the network device.

S705: The first terminal device sends the first message to the network device. Correspondingly, the network device receives the first message from the first terminal device.

In a possible implementation, S705 may include S705a and S705b. S705a is: The first terminal device sends the first message to the network device in a third time window. S705b is: The network device receives the first message in the first time window.

For example, a start time unit of the third time window is (n+X-TA1), where n is the last time unit in which the first terminal device receives the first RAR message, and TA1 represents the first TA value.

In the LTE system, X is 6. Alternatively, in the NR system, X is k₂+Δ+2^{u}*K_{cell,offset}. K_{cell,offset} is a scheduling offset used for the timing relationships that are modified for NTN (Scheduling offset used for the timing relationships that are modified for NTN). K_{cell,offset} may be configured by the network device for the first terminal device. For example, K_{cell,offset} may be configured by the network device for the first terminal device by using a cell-specific offset K (CellSpecific_Koffset). Alternatively, if the network device does not configure K_{cell,offset} for the first terminal device, K_{cell,offset} may be 0, and k₂ and Δ may be preconfigured or predefined in the first terminal device.

Table 4 shows possible values of k₂ when a time domain resource of a physical uplink shared channel (physical uplink shared channel, PUSCH) is a normal (normal) cyclic prefix.

**Table 4**

| Row index | PUSCH mapping type (mapping type) | k₂ | S | L |
|---|---|---|---|---|
| 1 | Type A | j | 0 | 14 |
| 2 | Type A | j | 0 | 12 |
| 3 | Type A | j | 0 | 10 |
| 4 | Type B | j | 2 | 10 |
| 5 | Type B | j | 4 | 10 |
| 6 | Type B | j | 4 | 8 |
| 7 | Type B | j | 4 | 6 |
| 8 | Type A | j+1 | 0 | 14 |
| 9 | Type A | j+1 | 0 | 12 |
| 10 | Type A | j+1 | 0 | 10 |
| 11 | Type A | j+2 | 0 | 14 |
| 12 | Type A | j+2 | 0 | 12 |
| 13 | Type A | j+2 | 0 | 10 |
| 14 | Type B | j | 8 | 6 |
| 15 | Type A | j+3 | 0 | 14 |
| 16 | Type A | j+3 | 0 | 10 |

S represents a start symbol of a PUSCH, and L represents a quantity (or a length) of symbols occupied by the PUSCH.

Table 5 shows possible values of k₂ when a time domain resource of a PUSCH is a normal (normal) cyclic prefix.

**Table 5**

| Row index | PUSCH mapping type (mapping type) | k₂ | S | L |
|---|---|---|---|---|
| 1 | Type A | j | 0 | 8 |
| 2 | Type A | j | 0 | 12 |
| 3 | Type A | j | 0 | 10 |
| 4 | Type B | j | 2 | 10 |
| 5 | Type B | j | 4 | 4 |
| 6 | Type B | j | 4 | 8 |
| 7 | Type B | j | 4 | 6 |
| 8 | Type A | j+1 | 0 | 8 |
| 9 | Type A | j+1 | 0 | 12 |
| 10 | Type A | j+1 | 0 | 10 |
| 11 | Type A | j+2 | 0 | 6 |
| 12 | Type A | j+2 | 0 | 12 |
| 13 | Type A | j+2 | 0 | 10 |
| 14 | Type B | j | 8 | 4 |
| 15 | Type A | j+3 | 0 | 8 |
| 16 | Type A | j+3 | 0 | 10 |

For a value of j, refer to content in the following Table 6.

**Table 6**

| u_{PUSCH} | j |
|---|---|
| 0 | 1 |
| 1 | 1 |
| 2 | 2 |
| 3 | 3 |
| 4 | 11 |
| 5 | 12 |

u_{PUSCH} represents a PUSCH subcarrier spacing configuration. For a value of Δ, refer to the following Table 7.

**Table 7**

| u_{PUSCH} | Δ |
|---|---|
| 0 | 2 |
| 1 | 3 |
| 2 | 4 |
| 3 | 6 |
| 4 | 24 |
| 5 | 48 |

With reference to the content in Table 4 to Table 7, it can be learned that, if a subcarrier spacing is 15 kHz and a PUSCH mapping type is a PUSCH mapping Type A, the start time unit of the third time window may be, for example, (n+3), (n+4), (n+5), or (n+6); or if a subcarrier spacing is 30 kHz and a PUSCH mapping type is a PUSCH mapping Type A, the start time unit of the third time window may be (n+4), (n+5), (n+6), or (n+7).

A start time unit of the first time window may be equal to the start time unit of the third time window. Alternatively, a start time unit of the first time window is a result of adding a fourth duration to the start time unit of the third time window.

When the start time unit of the first time window is the result of adding the fourth duration to the start time unit of the third time window, the network device may determine the third time window in a manner in which the first terminal device determines the third time window, and determine the first time window based on the third time window. The fourth duration may be preconfigured or predefined in the network device.

S706: The second terminal device sends the second message to the network device. Correspondingly, the network device receives the second message from the second terminal device.

In a possible implementation, S706 may include S706a and S706b. S706a is: The second terminal device sends the second message to the network device in a fourth time window. S706b is: The network device receives the second message in the second time window.

The second terminal device may alternatively determine the fourth time window based on the second TA value. For a manner of determining the fourth time window, refer to the foregoing manner of determining the third time window by the first terminal device. In addition, the network device may determine the second time window. For a manner of determining the second time window, refer to the foregoing content of determining the first time window by the network device.

In this embodiment of this application, an overlapping duration between the second time window and the first time window is less than or equal to the first threshold.

If the first threshold is 0, the second time window and the first time window do not overlap at all, or it may be described as that there is no overlap between the second time window and the first time window. Alternatively, if the first threshold is greater than 0, the second time window overlaps the first time window, but the overlapping duration is less than the first threshold. For example, if the first threshold is 4.7 microseconds (µs), the overlapping duration between the first time window and the second time window may be 2 µs, 4.7 µs, or the like.

When the first TA value and the second TA value satisfy different conditions, the second time window and the first time window also have different relationships. The following provides an example for description.

If the first TA value and the second TA value satisfy the foregoing condition 1 (to be specific, the difference between the first TA value and the second TA value is greater than or equal to the first value), the first time window and the second time window may not overlap at all. For example, the first time window is the 1^{st} time unit, and the second time window is the 3^{rd} time unit.

If the first TA value and the second TA value satisfy the foregoing condition 2 (to be specific, the difference between the first TA value and the second TA value is greater than or equal to the second value), the second time window and the first time window have different relationships due to different first thresholds. Details are described separately below.

B1: The first threshold is as the case shown in A1, to be specific, the first threshold is zero, indicating that the difference between the first TA value and the second TA value is equal to the first value. In this case, the first time window and the second time window may not overlap at all.

B2: The first threshold is as the case shown in A2, to be specific, the first threshold is determined based on a length of a cyclic prefix of a part or all of the M time units, indicating that the difference between the first TA value and the second TA value is less than or equal to the second value. In this case, the first time window and the second time window may partially overlap, but the overlapping duration is less than or equal to the first threshold.

B2-1: The first threshold is as the case in A2-1, to be specific, the first threshold is the length of the first cyclic prefix. In this case, the first time window and the second time window may partially overlap, and the overlapping duration between the first time window and the second time window is less than or equal to the length of the first cyclic prefix.

B2-2: The first threshold is as the case in A2-2, to be specific, the first threshold is the average value of the lengths of the plurality of cyclic prefixes. In this case, the first time window and the second time window may partially overlap, and the overlapping duration between the first time window and the second time window is less than or equal to the average value of the lengths of the plurality of cyclic prefixes.

B2-3: The first threshold is as the case in A2-3, to be specific, the first threshold is an average value of lengths of a part of cyclic prefixes in the plurality of cyclic prefixes. In this case, the first time window and the second time window may partially overlap, and the overlapping duration between the first time window and the second time window is less than or equal to the average value of the lengths of the part of cyclic prefixes in the plurality of cyclic prefixes.

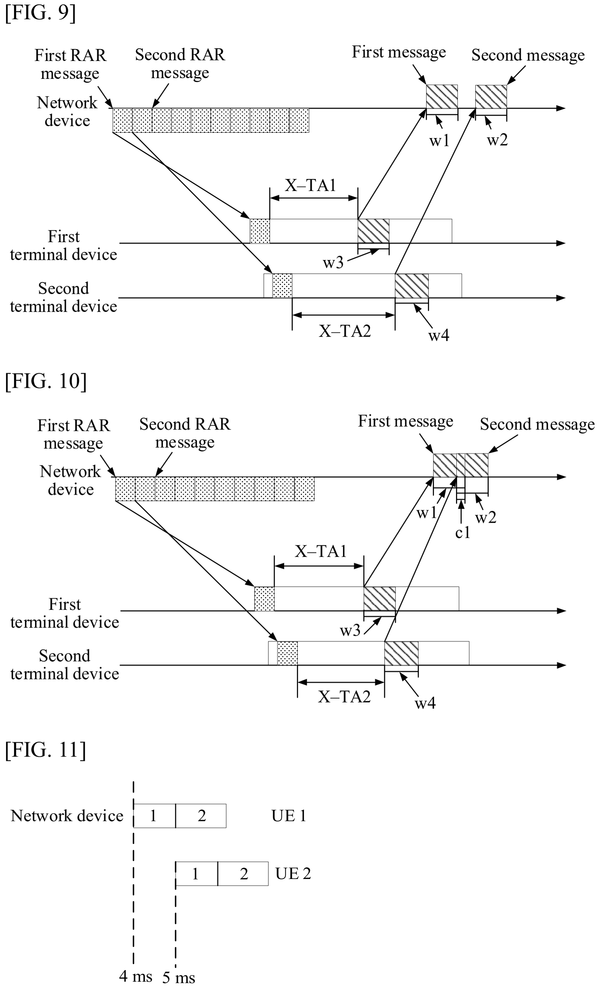

For example, FIG. 9 is a diagram of a random access process according to an embodiment of this application. In FIG. 9, an example in which a difference between TA1 and TA2 is greater than or equal to a first value is used for illustration.

As shown in FIG. 9, a first terminal device sends a first message in a third time window w3, and a start time unit of the third time window w3 is a time unit (n+X-TA1); and a second terminal device sends a second message in a fourth time window w4, and a start time unit of the fourth time window w4 is a time unit (n+X-TA2), where TA2 represents a second TA value. In this case, a difference between a start moment of the third time window and a start moment of the fourth time window is greater than or equal to (TA1-TA2-first value), and is less than or equal to (TA1-TA2). However, because the difference between TA1 and TA2 is greater than or equal to the first value, a first time window w1 in which a network device receives the first message and a second time window w2 in which the network device receives the second message do not overlap, to avoid mutual interference between the first message and the second message. As shown in FIG. 9, the first time window and the second time window do not overlap. In embodiments of this application, a beginning moment may also be referred to as a start moment.

Alternatively, for example, FIG. 10 is a diagram of a random access process according to an embodiment of this application. In FIG. 10, an example in which a difference between TA1 and TA2 is greater than or equal to a second value is used for illustration.

As shown in FIG. 10, a first terminal device sends a first message in a third time window w3, and a start time unit of the third time window w3 is a time unit (n+X-TA1); and a second terminal device sends a second message in a fourth time window w4, and a start time unit of the fourth time window w4 is a time unit (n+X-TA2). In this case, a difference between a start moment of the third time window and a start moment of the fourth time window is greater than or equal to (TA1-TA2-first value), and is less than or equal to (TA1-TA2). However, because the difference between TA1 and TA2 is greater than or equal to the second value, an overlapping duration c1 between the first time window w1 and the second time window w2 is less than or equal to a first threshold. In this way, the network device can still successfully receive the first message and the second message, and mutual interference between the first message and the second message is reduced.

S707: The network device sends a third message to the first terminal device. Correspondingly, the first terminal device receives the third message from the network device. The third message is for representing contention resolution (contention solution). The third message is, for example, Msg4.

S708: The network device sends a fourth message to the second terminal device. Correspondingly, the second terminal device receives the fourth message from the network device. The fourth message is for representing contention resolution. The fourth message is, for example, Msg4.

S707 and S708 are optional steps, and are shown by using dashed lines in FIG. 7.

It should be understood that, in the embodiment shown in FIG. 7, two terminal devices, namely, the first terminal device and the second terminal device, are used as an example. Actually, the communication method provided in this embodiment of this application may be applicable to three or more terminal devices. This is not limited in this embodiment of this application.

In this embodiment of this application, before receiving a random access preamble from the terminal device, the network device may indicate a timing advance to the terminal device by using a random access response message. For different terminal devices, the network device may respectively indicate different timing advances, to stagger time windows in which the network device receives messages (for example, Msg3) from the different terminal devices. This reduces interference between the messages of the different terminal devices, improves a success rate of receiving the message of the terminal device by the network device, and improves a success rate of accessing the network device by the terminal device. In addition, because the network device respectively indicates the timing advances for the different terminal devices, flexibility of indicating the timing advance by the network device is high, and a quantity of random response messages delivered by the network device within a specific duration is not affected. In this way, the network device can access more terminal devices within a fixed duration, and more terminal devices can access the network device in a timely manner, to improve efficiency of accessing the network device by the terminal device.

In another random access mechanism, a base station may first receive a random access preamble from the terminal device, and estimate round-trip time between the base station and the terminal device based on the random access preamble. The base station performs a modulo operation on the round-trip time to obtain a remainder, and uses the remainder as a timing advance. The base station may indicate a TA value to the terminal device by using a RAR message, so that the terminal device can perform delay compensation based on the TA value. In this way, a start moment at which the base station receives Msg3 from the terminal device can be aligned with a start moment of a slot. However, in this manner, the start moment at which the base station receives Msg3 of the terminal device is fixed, resulting in poor flexibility.

For example, FIG. 11 shows time windows in which a network device receives Msg3 of different UEs in another random access mechanism. If round-trip time between a UE 1 and the network device is 4.5 ms, the network device may indicate a TA value of 0.5 ms to the UE 1, and if round-trip time between a UE 2 and the network device is 5.4 ms, the base station may indicate a TA value of 0.4 ms to the UE 2. In this case, a start moment at which the base station receives Msg3 from the UE 1 is a start moment of the 4^{th} slot (for example, at the 4^{th} ms), and a start moment at which the base station receives Msg3 from the UE 2 is a start moment of the 5^{th} slot (for example, at the 5^{th} ms).

In view of this, embodiments of this application provide a communication solution. In the solution, the network device may flexibly indicate a first timing advance to the first terminal device and/or indicate a second timing advance to the second terminal device. Further, a first time window that is determined by the network device based on the first timing advance and that is for receiving the first message (for example, Msg3) from the first terminal device does not need to be aligned with a start moment of a time unit, and a second time window that is determined based on the second timing advance and that is for receiving the second message (for example, Msg3) from the second terminal device does not need to be aligned with a start moment of a time unit, so that time windows in which the network device receives messages (for example, Msg3) from different terminals are more flexible.

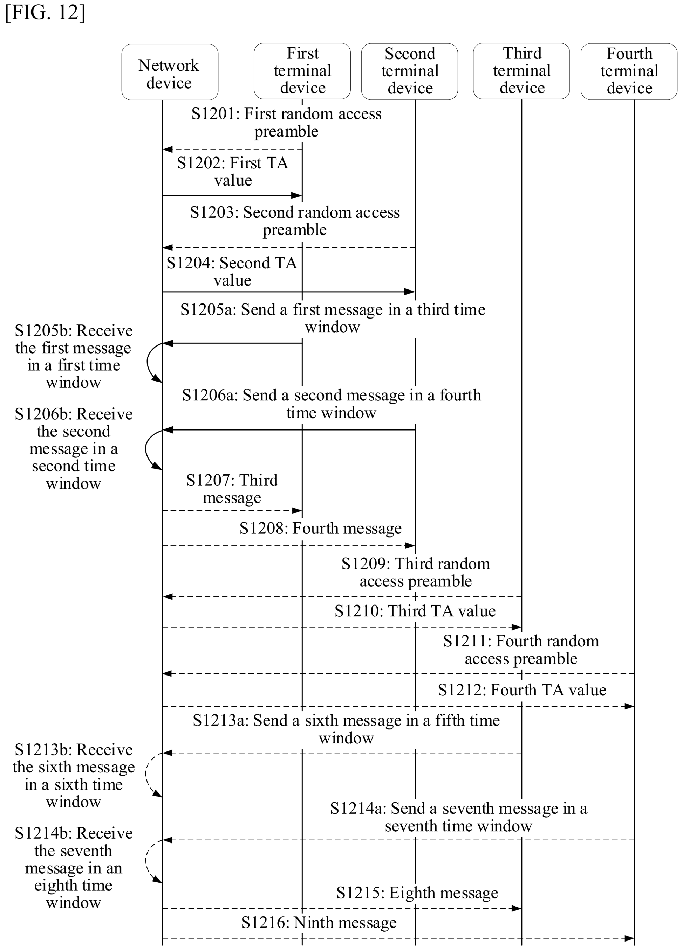

FIG. 12 is a diagram of a communication method according to an embodiment of this application.

S1201: A first terminal device sends a first random access preamble to a network device. Correspondingly, the network device receives the first random access preamble from the first terminal device.

For example, the first random access preamble may be carried in Msg1, and the first terminal device sends Msg1 to the network device. This is equivalent to sending the first random access preamble. The first random access preamble indicates the first terminal device to initiate random access, and is for determining (or estimating) first round-trip time between the first terminal device and the network device.

S1202: The network device sends a first TA value to the first terminal device. Correspondingly, the first terminal device receives the first TA value from the network device.

For example, the network device may determine the first TA value based on the first round-trip time. In a possible implementation, the network device may determine the first round-trip time based on a moment at which the first random access preamble is received and a moment at which the first terminal device sends the first random access preamble. The moment at which the first terminal device sends the first random access preamble may be preconfigured or predefined in the network device, for example, preconfigured in the network device in a protocol.

The network device may perform a modulo operation on the first round-trip time to obtain a first remainder, and use a result of subtracting a first duration from the first remainder as a first timing advance. The first duration may be preconfigured or predefined in the network device, or may be determined by the network device.

Optionally, before subtracting the first duration from the first remainder, the network device may determine whether the first remainder is greater than a second duration. If the first remainder is greater than the second duration, the first duration is subtracted from the first remainder. If the first remainder is less than or equal to the second duration, the first remainder may be directly used as the first timing advance. The first timing advance may be less than or equal to the second duration. The second duration may be preconfigured or predefined in the network device, or may be determined by the network device. The second duration is less than or equal to a maximum value to which a timing advance can be adjusted by the first terminal device. For example, the first duration is 0.5 ms or 0.34 ms, and the second duration is, for example, 0.67 ms, 0.5 ms, or 0.34 ms.

For example, the first duration is 0.5 ms, and the second duration is 0.67 ms. If the first remainder re_ms is greater than 0.67, the first TA value TA1=re_ms-0.5 ms. If the first remainder re_ms is less than or equal to 0.67, TA1=re_ms.

Alternatively, the first duration is 0.5 ms, and the second duration is 0.5 ms. If the first remainder re_ms is greater than 0.5, TA1=re_ms-0.5 ms. If the first remainder re_ms is less than or equal to 0.5, TA1=re_ms.

Alternatively, the first duration is 0.5 ms, and the second duration is 0.34 ms. If the first remainder re_ms is greater than 0.34, TA1=re_ms-0.5 ms. If the first remainder re_ms is less than or equal to 0.34, TA1=re_ms.

Alternatively, the first duration is 0.34 ms, and the second duration is 0.34 ms. If the first remainder re_ms is greater than 0.34, TA1=re_ms-0.34 ms. If the first remainder re_ms is less than or equal to 0.34, TA1=re_ms.

In a possible implementation, the first terminal device may include the first TA value in a first RAR message, and send the first RAR message to the network device. This is equivalent to sending the first TA value to the network device.

S1203: A second terminal device sends a second random access preamble to the network device. Correspondingly, the network device receives the second random access preamble from the second terminal device.

For example, the second random access preamble may be carried in Msg1, and the second terminal device sends Msg1 to the network device. This is equivalent to sending the second random access preamble. The second random access preamble indicates the second terminal device to initiate random access, and is for estimating second round-trip time between the second terminal device and the network device.

S1204: The network device sends a second TA value to the second terminal device. Correspondingly, the second terminal device receives the second TA value from the network device.

For example, the network device may determine the first TA value based on the second round-trip time. For content of determining the second round-trip time by the network device, refer to the foregoing content of determining the first round-trip time; and for a process of determining the second TA value based on the second round-trip time, refer to the foregoing content of determining the first TA value based on the first round-trip time.

In a possible implementation, the second terminal device may include the second TA value in a second RAR message, and send the second RAR message to the network device. This is equivalent to sending the second TA value to the network device.

S1205: The first terminal device sends a first message to the network device. Correspondingly, the network device receives the first message from the first terminal device. The first message is for requesting to establish a connection to the network device, for example, establish an RRC connection.

For example, S1205 includes S1205a and S1205b. S1205a is: The first terminal device sends the first message in a third time window. S1205b is: The network device receives the first message in a first time window.

In this embodiment of this application, a start moment of the first time window is different from (or is not aligned with) a start moment of a first time unit. In other words, the start moment of the first time window is a non-start moment of the first time unit. The first time unit may be, for example, predefined or preconfigured in the network device in a protocol, and the first time unit is, for example, a time unit in which a start moment at which the network device receives the first message is located.

A start time unit of the third time window is, for example, a time unit (n1+X-TA1), where n1 represents the last time unit in which the first terminal device receives the first TA value. For a value of X, refer to content of X in FIG. 7. If the first TA value is carried in the first RAR message, n1 is the same as n in FIG. 7.

The network device may determine the first time window based on the first TA value. For example, a difference between the start moment of the first time window and a start moment of the third time window is greater than or equal to the first round-trip time. For example, a start time unit of the first time window is (n1+X-TA1+delay1), where delay1 represents the first round-trip time.

S1206: The second terminal device sends a second message to the network device. Correspondingly, the network device receives the second message from the second terminal device. The second message is for requesting to establish a connection to the network device, for example, establish an RRC connection.

For example, S1206 includes S1206a and S1206b. S1206a is: The second terminal device sends the second message in a fourth time window. S1206b is: The network device receives the second message in a second time window.

In this embodiment of this application, a start moment of the second time window is different from (or is not aligned with) a start moment of a second time unit. In other words, the start moment of the second time window is a non-start moment of the second time unit. For example, the second time unit may be predefined or preconfigured in the network device in a protocol, and the second time unit is, for example, a time unit in which a start moment at which the network device receives the second message is located.

A start time unit of the fourth time window is, for example, a time unit (n2+X-TA2), where TA2 represents the second TA value, and n2 represents the last time unit in which the second terminal device receives the second TA value. For a value of X, refer to content of X in FIG. 7.

The network device may determine the second time window based on the second TA value. For example, a difference between the start moment of the second time window and a start moment of the fourth time window is greater than or equal to the first round-trip time. For example, a start time unit of the second time window is a time unit (n2+X-TA2+delay2), where delay2 represents second round-trip time.

In this embodiment of this application, the network device determines TA1 and TA2 in a same manner, and processes of determining the first time window and the second time window by the network device are similar, so that there may be an interval of N time units between the start moment of the first time window and the start moment of the second time window, where N is a natural number.

S1207: The network device sends a third message to the first terminal device. Correspondingly, the first terminal device receives the third message from the network device. The third message is for representing contention resolution. The third message is, for example, Msg4.

S1208: The network device sends a fourth message to the second terminal device. Correspondingly, the second terminal device receives the fourth message from the network device. The fourth message is for representing contention resolution. The fourth message is, for example, Msg4.

S1207 and S1208 are optional steps, and are shown by using dashed lines in FIG. 12.

In this embodiment of this application, an example in which there is an interval of N time units between the first time window and the second time window is used. In this assumption, the network device may receive the first message and the second message in a spatial division manner or a frequency division manner. In this case, the first terminal device and the second terminal device may be considered as one terminal device group (which may be referred to as a first terminal device group) for the network device. When both the first terminal device and the second terminal device are UEs, the first terminal device and the second terminal device may be considered as one UE group (which may be referred to as a first UE group).

S1209: A third terminal device sends a third random access preamble to the network device. Correspondingly, the network device receives the third random access preamble from the third terminal device.

For example, the third random access preamble may be carried in Msg1, and the third terminal device sends Msg1 to the network device. This is equivalent to sending the third random access preamble. The third random access preamble indicates the third terminal device to initiate random access, and is for determining (or estimating) third round-trip time between the third terminal device and the network device.

S1210: The network device sends a third TA value to the third terminal device. Correspondingly, the third terminal device receives the third TA value from the network device.

For example, the network device may determine the third TA value based on the third round-trip time. In a possible implementation, the network device may determine the third round-trip time based on a moment at which the third random access preamble is received and a moment at which the third terminal device sends the third random access preamble. The moment at which the third terminal device sends the third random access preamble may be preconfigured or predefined in the network device, for example, preconfigured in the network device in a protocol.

The network device may perform a modulo operation on the third round-trip time to obtain a third remainder. In this embodiment of this application, an example in which the third remainder is less than the second duration is used for description. In this case, the network device may determine the third remainder as the third TA value.

S1211: A fourth terminal device sends a fourth random access preamble to the network device. Correspondingly, the network device receives the fourth random access preamble from the fourth terminal device.

For example, the fourth random access preamble may be carried in Msg1, and the fourth terminal device sends Msg1 to the network device. This is equivalent to sending the fourth random access preamble. The fourth random access preamble indicates the fourth terminal device to initiate random access, and is for determining (or estimating) fourth round-trip time between the fourth terminal device and the network device.

S1212: The network device sends a fourth TA value to the fourth terminal device. Correspondingly, the fourth terminal device receives the fourth TA value from the network device.

For example, the network device may determine the fourth TA value based on the fourth round-trip time. In a possible implementation, the network device may determine the fourth round-trip time based on a moment at which the fourth random access preamble is received and a moment at which the fourth terminal device sends the fourth random access preamble. The moment at which the fourth terminal device sends the fourth random access preamble may be preconfigured or predefined in the network device, for example, preconfigured in the network device in a protocol.

The network device may perform a modulo operation on the fourth round-trip time to obtain a fourth remainder. In this embodiment of this application, an example in which the fourth remainder is less than the second duration is used for description. In this case, the network device may determine the fourth remainder as the fourth TA value.

S1213: The third terminal device sends a sixth message to the network device. Correspondingly, the network device receives the sixth message from the third terminal device. The sixth message is for requesting to establish a connection to the network device, for example, establish an RRC connection.

For example, S1213 includes S1213a and S1213b. S1213a includes: The third terminal device sends the sixth message in a fifth time window. S1213b is: The network device receives the sixth message in a sixth time window.

For a manner in which the third terminal device determines the fifth time window, refer to the foregoing content of determining the third time window by the first terminal device in S1205a; and for a manner in which the network device determines the sixth time window, refer to the foregoing content of determining the first time window by the network device. Details are not described herein again.

S1214: The fourth terminal device sends a seventh message to the network device. Correspondingly, the network device receives the seventh message from the fourth terminal device. The seventh message is for requesting to establish a connection to the network device, for example, establish an RRC connection.

For example, S1214 includes S1214a and S1214b. S1214a includes: The fourth terminal device sends the seventh message in a seventh time window. S1214b includes: The network device receives the seventh message in an eighth time window.

For a manner in which the fourth terminal device determines the seventh time window, refer to the foregoing content of determining the third time window by the first terminal device in S1205a; and for a manner in which the network device determines the eighth time window, refer to the foregoing content of determining the first time window by the network device. Details are not described herein again.

Because the network device uses the third remainder as the third TA value and uses the fourth remainder as the fourth TA value, the sixth time window can be aligned with a start moment of a third time unit, the seventh time window can be aligned with the start moment of the fourth time window, and there are M time units between a start moment of the sixth time window and a start moment of the eighth time window, where M is a natural number. For example, the third time unit may be predefined or preconfigured in the network device in a protocol, and the third time unit is, for example, a time unit in which a start moment at which the network device receives the sixth message is located. For example, a fourth time unit may be predefined or preconfigured in the network device in a protocol, and the fourth time unit is, for example, a time unit in which a start moment at which the network device receives the seventh message is located. In this case, the network device may receive the sixth message and the seventh message in a spatial division manner or a frequency division manner. In this case, the third terminal device and the fourth terminal device may be considered as a terminal device group (which may be referred to as a second terminal device group) for the network device. When both the third terminal device and the fourth terminal device are UEs, the third terminal device and the fourth terminal device may be considered as one UE group (which may be referred to as a second UE group).

S1215: The network device sends an eighth message to the third terminal device. Correspondingly, the third terminal device receives the eighth message from the network device. The eighth message is for representing contention resolution. The eighth message is, for example, Msg4.

S1216: The network device sends a ninth message to the fourth terminal device. Correspondingly, the fourth terminal device receives the ninth message from the network device. The ninth message is for representing contention resolution. The ninth message is, for example, Msg4.

S1209 to S1216 show a process in which the third terminal device and the fourth terminal device perform random access. S1209 to S1216 are all optional steps, and are shown by using dashed lines in FIG. 12.

It should be understood that, in the embodiment shown in FIG. 12, four terminal devices, namely, the first terminal device, the second terminal device, the third terminal device, and the fourth terminal device, are used as an example. Actually, the communication method provided in this embodiment of this application may be applicable to two or more terminal devices. This is not limited in this embodiment of this application.

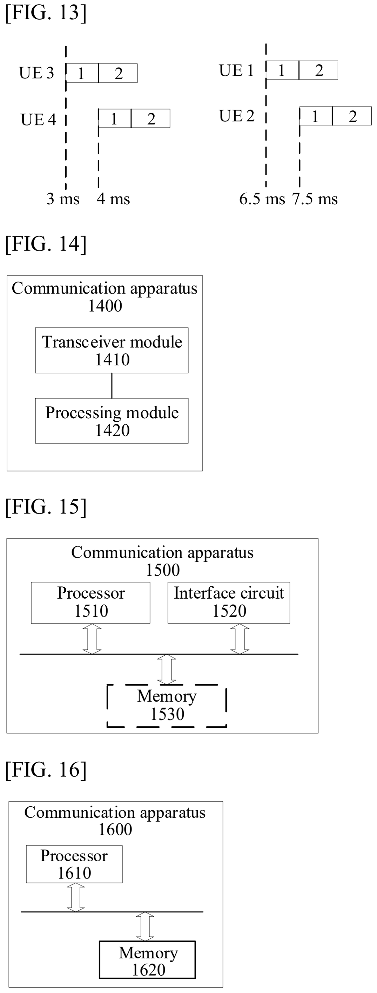

FIG. 13 is a diagram of time windows in which a network device receives Msg3 of different UEs according to an embodiment of this application. In FIG. 13, an example in which a first terminal device is a UE 1, a second terminal device is a UE 2, a third terminal device is a UE 3, and a fourth terminal device is a UE 4 is used. In addition, in FIG. 13, an example in which a first message, a second message, a sixth message, and a seventh message are all Msg3, a first duration is 0.5 ms, and a second duration is 0.67 ms is used for description. As shown in FIG. 13, round-trip time between the UE 1, the UE 2, the UE 3, and the UE 4 and the network device are respectively 8.9 ms, 9.9 ms, 5.5 ms, and 6.5 ms. In other words, in FIG. 13, an example in which first round-trip time, second round-trip time, third round-trip time, and fourth round-trip time are respectively 8.9 ms, 9.9 ms, 5.5 ms, and 6.5 ms is used.

If the network device determines that a remainder (namely, a first remainder) corresponding to the first round-trip time is 0.9 ms, the network device determines that a TA value (namely, a first TA value) corresponding to the UE 1 is a difference between the first remainder and the first duration, namely, 0.4 ms. Similarly, if the network device determines that a remainder (namely, a second remainder) corresponding to the second round-trip time is 0.9 ms, the network device determines that a TA value (namely, the second TA value) corresponding to the UE 2 is 0.4 ms.

The network device determines that a remainder (namely, a third remainder) corresponding to the third round-trip time is 0.5 ms, and the network device determines that the third remainder is less than the second duration. Therefore, the network device determines that a TA value (namely, a third TA value) corresponding to the UE 3 is 0.5 ms. Similarly, the network device determines that a remainder (namely, a fourth remainder) corresponding to the fourth round-trip time is 0.5 ms, and the network device determines that the fourth remainder is less than the second duration. Therefore, the network device determines that a TA value (namely, a fourth TA value) corresponding to the UE 4 is 0.5 ms.

Further, the UE 1 sends Msg3 with an advance of 0.4 ms, the UE 2 sends Msg3 with an advance of 0.4 ms, the UE 3 sends Msg3 with an advance of 0.5 ms, and the UE 1 sends Msg3 with an advance of 0.5 ms. In this case, the network device receives Msg3 of the UE 1 at the 0.5^{th} ms of a time unit corresponding to the 6.5^{th} ms, receives Msg3 of the UE 2 at the 0.5^{th} ms of a time unit corresponding to the 7.5^{th} ms, and receives Msg3 of the UE 3 at a beginning moment of a time unit corresponding to the 3^{rd} ms, and receives Msg3 of the UE 4 at a beginning moment of a time unit corresponding to the 4^{th} ms. In this way, it is equivalent to that the network device uses the UE 1 and the UE 2 as a first UE group, and uses the UE 3 and the UE 4 as the second UE group. A beginning moment at which the network device receives Msg3 of the first UE group is a non-start moment of a time unit, and a beginning moment at which the network device receives Msg3 of the second UE group is a beginning moment of a time unit. In this way, the network device receives Msg3 of the UE 1 and the UE 2 in the first UE group through frequency division multiplexing or spatial division multiplexing, and the network device receives Msg3 of the UE 3 and the UE 4 in the second UE group through frequency division multiplexing or spatial division multiplexing.

In this embodiment of this application, a start moment at which the network device receives Msg3 does not need to be aligned with a start moment of a time unit, so that time at which the network device receives Msg3 is more flexible. In addition, the network device may indicate the terminal device to compensate for a part of a delay based on a TA value, and the network device compensates for a part of the delay, so that a case in which an excessively large TA value needs to be indicated is avoided. This can avoid a case in which the terminal device cannot accurately or successfully compensate for a delay due to an excessively large TA value. In addition, a quantity of bits required by the network device to indicate the TA value can be reduced, to reduce resource overheads for indicating the TA value by the network device. Further, this embodiment of this application is applicable to a scenario in which round-trip time between the network device and the terminal device is large, for example, an NTN scenario. In addition, when a remainder corresponding to the round-trip time is less than or equal to the second duration, processing may not be performed on the round-trip time, to reduce an operation of the network device. Further, the network device may divide terminal devices into two groups of terminal devices depending on whether a reminder is less than or equal to the second duration, or greater than the second duration, so that the network device can receive a message (for example, Msg3) from each terminal device group through frequency division multiplexing or spatial division multiplexing.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 14 and FIG. 15 are diagrams of structures of possible communication apparatuses according to an embodiment of this application. The communication apparatuses may be configured to implement functions of the terminal device or the network device in the foregoing method embodiments. Therefore, beneficial effects of the foregoing method embodiments can also be implemented. In this embodiment of this application, the communication apparatus is, for example, the network device in FIG. 2, or any satellite, any satellite ground station, or the like in FIG. 3 to FIG. 6.

As shown in FIG. 14, a communication apparatus 1400 includes a transceiver module 1410 and a processing module 1420. The communication apparatus 1400 may be configured to implement the function of the network device or the terminal device in the method embodiment shown in FIG. 7 or FIG. 12.

When the communication apparatus 1400 is configured to implement the function of the network device in the method embodiment shown in FIG. 7, the processing module 1420 may be configured to control the transceiver module 1410 to perform steps such as S701 to S706.

When the communication apparatus 1400 is configured to implement the function of the first terminal device in the method embodiment shown in FIG. 7, the processing module 1420 may control the transceiver module 1410 to perform steps such as S701 and S702, and S705a. Alternatively, when the communication apparatus 1400 is configured to implement the function of the second terminal device in the method embodiment shown in FIG. 7, the processing module 1420 may control the transceiver module 1410 to perform steps such as S703 and S704, and S706a.

When the communication apparatus 1400 is configured to implement the function of the network device in the method embodiment shown in FIG. 12, the processing module 1420 may be configured to control the transceiver module 1410 to perform steps such as S1202, S1204, S1205b, and S1206b.

When the communication apparatus 1400 is configured to implement the function of the first terminal device in the method embodiment shown in FIG. 12, the processing module 1420 may be configured to control the transceiver module 1410 to perform steps such as S1202 and S1205a.

When the communication apparatus 1400 is configured to implement the function of the second terminal device in the method embodiment shown in FIG. 12, the processing module 1420 may be configured to control the transceiver module 1410 to perform steps such as S1204 and S1206a.

For more detailed descriptions of the transceiver module 1410 and the processing module 1420, directly refer to related descriptions in the method embodiment shown in FIG. 7 or FIG. 12. Details are not described herein again.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, input data required by the processor 1510 to run instructions, or data generated after the processor 1510 runs instructions.

When the communication apparatus 1500 is configured to implement the method shown in FIG. 7 or FIG. 12, the processor 1510 is configured to perform a function of the processing module 1420, and the interface circuit 1520 is configured to perform a function of the transceiver module 1410.

When the communication apparatus is a module used in a network device, the network device module implements functions of the network device in the foregoing method embodiments. The module in the network device receives information from another module (for example, a radio frequency module or an antenna) in a base station, where the information is sent by a terminal to the network device. Alternatively, the module in the network device sends information to another module (for example, a radio frequency module or an antenna) in a base station, where the information is sent by the network device to a terminal. The module in the network device herein may be a baseband chip of the network device, or may be a DU or another module. The DU herein may be a DU in an O-RAN.

It may be understood that, in this embodiment of this application, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose-processor may be a microprocessor or any regular processor.

In an embodiment of this application, another example of a communication apparatus is provided. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiment. An example in which the communication apparatus includes one processor and one memory is used. As shown in FIG. 16, a communication apparatus 1600 includes a processor 1610 and a memory 1620. The processor 1610 may be coupled to the memory 1620. The memory 1620 stores instructions. When the instructions stored in the memory 1620 are executed by the processor 1610, the communication apparatus 1600 performs the method performed by the network device in the foregoing embodiment.

An embodiment of this application provides a communication system. The communication system includes a first terminal device, a second terminal device, and a network device. The first terminal device, the second terminal device, and the network device may implement the communication method shown in FIG. 7 or FIG. 12. Correspondingly, the first terminal device may also perform a function of the first terminal device in FIG. 7 or FIG. 12, the second terminal device may also perform a function of the second terminal device in FIG. 7 or FIG. 12, and the network device may also perform a function of the network device in FIG. 7 or FIG. 12.

An embodiment of this application provides a chip system. The chip system includes a processor and an interface. The processor is configured to invoke instructions from the interface and run the instructions, and when the processor executes the instructions, any foregoing communication method, for example, the communication method in FIG. 7 or FIG. 12, is implemented.

An embodiment of this application provides a computer-readable storage medium. The computer-readable storage medium is configured to store a computer program or instructions, and when the computer program or the instructions are run, any foregoing communication method, for example, the communication method in FIG. 7 or FIG. 12, is implemented.

An embodiment of this application provides a computer program product including instructions, and when the computer program product is run on a computer, any foregoing communication method, for example, the communication method in FIG. 7 or FIG. 12, is implemented.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a network device or a terminal device as discrete components.

All or a part of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or a logical conflict occurs, terms and/or descriptions in different embodiments are consistent and may be mutually referenced, and technical features in different embodiments may be combined based on an internal logical relationship thereof, to form a new embodiment.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, any combination of including singular items (pieces) or plural items (pieces). For example, at least one of a, b, or c indicates a, b, c, a and b, a and c, b and c, or a, b, and c, where a, b, and c may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a network device, wherein the method comprises:
sending a first random access response message, wherein the first random access response message indicates a first timing advance, the first timing advance is for determining a first time window for receiving a first message, and the first message is for requesting to establish a connection between a first terminal device and the network device;
receiving a first random access preamble from the first terminal device, wherein the first random access preamble is received after the first random access response message is sent;
sending a second random access response message, wherein the second random access response message indicates a second timing advance, the second timing advance is for determining a second time window for receiving a second message,
the second message is for requesting to establish a connection between a second terminal device and the network device, and an overlapping duration between the second time window and the first time window is less than or equal to a first threshold; and
receiving a second random access preamble from the second terminal device, wherein the second random access preamble is received after the second random access response message is sent.

2. The method according to claim 1, wherein a difference between the first timing advance and the second timing advance satisfies one of the following:
greater than or equal to a first value; or
greater than or equal to a second value, wherein
the second value is a difference between the first value and the first threshold, the first value is a largest value in a plurality of third values, any third value in the plurality of third values is a difference between round-trip time of the network device to two terminal devices, and the two terminal devices are any two terminal devices within a coverage area of at least one beam of the network device.

3. The method according to claim 1 or 2, wherein
the first threshold is zero; or
the first threshold is a length of a first cyclic prefix in cyclic prefixes of M time units; or
the first threshold is determined based on lengths of cyclic prefixes of M time units, wherein
the first message and/or the second message are/is received in the M time units, and M is an integer greater than 1.

4. The method according to claim 3, wherein the first cyclic prefix is one of the following:
a cyclic prefix of any time unit in the M time units; or
a longest cyclic prefix in the M time units; or
a shortest cyclic prefix in the M time units.

5. The method according to claim 3, wherein the first threshold is an average value of the lengths of the cyclic prefixes of the M time units.

6. The method according to any one of claims 1 to 5, wherein the method further comprises:
receiving the first message from the first terminal device in the first time window; and/or
receiving the second message from the second terminal device in the second time window.

7. The method according to any one of claims 1 to 6, wherein the method further comprises:
determining, based on the first timing advance, a third time window in which the first terminal device sends the first message, and determining the first time window based on the third time window; and/or
determining, based on the second timing advance, a fourth time window in which the second terminal device sends the second message, and determining the second time window based on the fourth time window.

8. The method according to any one of claims 1 to 7, wherein
the network device is a network device in a non-terrestrial network.

9. A communication apparatus, comprising a transceiver module and a processing module, wherein under control of the processing module, the transceiver module is configured to:
send a first random access response message, wherein the first random access response message indicates a first timing advance, the first timing advance is for determining a first time window for receiving a first message, and the first message is for requesting to establish a connection between a first terminal device and a network device;
receive a first random access preamble from the first terminal device, wherein the first random access preamble is received after the first random access response message is sent;
send a second random access response message, wherein the second random access response message indicates a second timing advance, the second timing advance is for determining a second time window for receiving a second message, the second message is for requesting to establish a connection between a second terminal device and the network device, and an overlapping duration between the second time window and the first time window is less than or equal to a first threshold; and
receive a second random access preamble from the second terminal device, wherein the second random access preamble is received after the second random access response message is sent.

10. The apparatus according to claim 9, wherein a difference between the first timing advance and the second timing advance satisfies one of the following:
greater than or equal to a first value; or
greater than or equal to a second value, wherein
the second value is a difference between the first value and the first threshold, the first value is a largest value in a plurality of third values, any third value in the plurality of third values is a difference between round-trip time of the network device to two terminal devices, and the two terminal devices are any two terminal
devices within a coverage area of at least one beam of the network device.

11. The apparatus according to claim 9 or 10, wherein the first threshold is zero; or
the first threshold is a length of a first cyclic prefix in cyclic prefixes of M time units; or
the first threshold is determined based on lengths of cyclic prefixes of M time units, wherein
the first message and/or the second message are/is received in the M time units, and M is an integer greater than 1.

12. The apparatus according to claim 11, wherein the first cyclic prefix is one of the following:
a cyclic prefix of any time unit in the M time units; or
a longest cyclic prefix in the M time units; or
a shortest cyclic prefix in the M time units.

13. The apparatus according to claim 11, wherein the first threshold is an average value of the lengths of the cyclic prefixes of the M time units.

14. The apparatus according to any one of claims 9 to 13, wherein under control of the processing module, the transceiver module is configured to:
receive the first message from the first terminal device in the first time window; and/or
receive the second message from the second terminal device in the second time window.

15. The apparatus according to any one of claims 9 to 13, wherein the processing module is further configured to:
determine, based on the first timing advance, a third time window in which the first terminal device sends the first message, and determine the first time window based on the third time window; and/or
determine, based on the second timing advance, a fourth time window in which the second terminal device sends the second message, and determine the second time
window based on the fourth time window.

16. The apparatus according to any one of claims 9 to 15, wherein the network device is a network device in a non-terrestrial network.

17. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 8 by using a logic circuit or by executing code instructions.

18. A computer program product comprising instructions, wherein when the instructions are run by a computing device cluster, the computing device cluster is caused to perform the method according to any one of claims 1 to 8.

19. A computer-readable storage medium, wherein the storage medium stores a computer program or instructions, and when the computer program or the instructions are executed by a communication apparatus, the method according to any one of claims 1 to 8 is implemented.
